(19) Europäisches Patentamt
European Patent Office
Office européen des brevets

(11) **EP 3 753 387 B1**

(12) **EUROPEAN PATENT SPECIFICATION**

(45) Date of publication and mention
of the grant of the patent:
**15.10.2025 Bulletin 2025/42**

(21) Application number: **19181375.7**

(22) Date of filing: **19.06.2019**

(51) International Patent Classification (IPC):
*A01B 69/04* (2006.01)        *B62D 37/04* (2006.01)
*A01D 34/86* (2006.01)        *G05D 105/15* (2024.01)
*G05D 1/248* (2024.01)

(52) Cooperative Patent Classification (CPC):
**A01D 34/86; A01B 69/008; A01D 34/008;
B62D 37/04; G05D 1/2464; G05D 1/248;
G05D 1/6445; G05D 1/648;** G05D 2105/15;
G05D 2107/23; G05D 2109/10

(54) **ROBOTIC VEHICLE FOR MOVABLE OPERATION IN A WORK AREA**

ROBOTISCHES FAHRZEUG FÜR BEWEGLICHEN BETRIEB IN EINEM ARBEITSBEREICH

VÉHICULE ROBOTISÉ POUR FONCTIONNEMENT MOBILE DANS UNE ZONE DE TRAVAIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.12.2020 Bulletin 2020/52**

(73) Proprietor: **Stiga S.p.A.**
**31033 Castelfranco Veneto (TV) (IT)**

(72) Inventors:
• **Robinson, Sean**
**31033 Castelfranco Veneto (TV) (IT)**
• **Scapin, Michele**
**36061 Bassano del Grappa (VI) (IT)**

(74) Representative: **Richardt Patentanwälte PartG
mbB
Wilhelmstraße 7
65185 Wiesbaden (DE)**

(56) References cited:
JP-A- H04 356 289        US-A- 4 322 094
US-A1- 2011 022 267

## Description

The invention relates to a robotic vehicle for soil cultivation, a method for operating a robotic vehicle and a computer program product.

State-of-the-art robotic vehicles are known for autonomously performing movable operation on a work area comprising soil cultivation. In case the of a sloped work area the robotic vehicle has to climb the slope in order to be able perform a soil cultivation of the whole work area. Climbing a slope challenging for a robotic vehicle performing movable operation on a sloped work area.

EP1228951 A1 discloses an agricultural machine comprising a mass e.g. the motor which is mounted to the vehicle chassis by a lever mechanism. The mass position is changed by the levers to give an adjustable center of mass between the vehicle wheels.

US 4 322 094 A refers to a weighting device, which is suspended beneath a tractor and between its wheels to improve the traction of the wheels and the stability of the tractor. The device has the general form of a flat, elongated element with a width substantially less than the spacing between the wheels of the tractor and which extends from at least the rear of the tractor to a point beyond the front of the tractor in order to carry weights which are utilized to prevent the tractor from rearing or lifting. The weight is suspended on the tractor by elements which include flaps, sliding shoulders integral with the tractor, sliding wing flanges and jacks. The jacks may be controlled by fluid distributors for driving the device, and therefore the weights, both longitudinally and transversely along a plane substantially parallel to the ground or other support surface.

JP H04 356289 A refers to a device for controlling of a center of gravity of an agricultural groundwork vehicle. The device enables safe and ensured agricultural work as to various kinds of groundwork using the agricultural groundwork vehicle equipped with the device for controlling the groundwork vehicle by making the center of gravity of the vehicle freely variable with the kind of the groundwork. The vehicle comprises a fuel tank, a battery, and front wheels, which are shifted according to the kind and condition of groundwork so that the center of gravity of the vehicle is shifted. In a rotary work mode, if the vehicle is judged to be in its non-working state according to the hydraulic pressure value of a lift, the center of gravity is shifted forward and when a water/-dry rice field changeover switch is turned to its water field side the center of gravity is further shifted forward. When a front-wheel speed increasing device is turned on in order to make a sharp turn, the center of gravity is located in the same position or shifted forward and when tracting work is performed the center of gravity is set near or behind its initial position and as loads are increased automatic four-wheel drive is turned on and the center of gravity is shifted forward.

It is an objective to provide for an improved robotic vehicle for soil cultivation, an improved method for operating a robotic vehicle and a computer program product.

Disclosed is a battery operated robotic vehicle for autonomously performing movable operation in a work area, the vehicle comprising a battery powering an engine of the vehicle, the movable operation comprising a soil cultivation, the vehicle comprising a controller comprising a memory comprising instructions, two simultaneously driven drive wheels, a mass component, an actuator and a sensor module in communicative connection with the controller, the wheels being spaced apart from each other in the transverse direction of the vehicle, the mass component being displaceable by the actuator in the transverse direction along a straight line, the sensor module being adapted for determining of a weight load of one of the wheels, for determining in the transverse direction the position of the center of mass of the vehicle from the weight load and for signaling the position to the controller, wherein execution of the instructions by the processor causes the controller to control the actuator for a movement of the mass component along the straight line depending on the signaled position of the center of mass.

Embodiments may have the benefit that due to the displacement of the mass component purely along the straight line the space requirement for accommodating the mass component is minimized. Instead of permitting a movement of the mass component on a circular path which forcibly shifts the center of mass of the vehicle upwards depending on the position of the mass component, the linear movement of the mass component in the vertical direction does not change the center of mass of the vehicle. Overall, this could make the vehicle move more stable.

Execution of the instructions by the processor causes the controller to control the vehicle to perform the movable operation with the soil cultivation at least in a sloped subarea of the work area following a scheduled movement trajectory covering the subarea, wherein the scheduled movement trajectory within the sloped subarea has a zigzag form comprising a plurality of sub-trajectories with mutually opposite directions of movement for climbing the slope of the subarea, wherein for each two sub-trajectories running directly adjacent to one another the direction of the movement of the vehicle is respectively opposite with one direction of movement comprising a forward movement of the vehicle and the other direction of the movement comprising a backward movement of the vehicle.

Thus, the movement of the vehicle is mainly forth and back avoiding any turns larger than 20 degrees of the vehicle. As a result, within the subarea the side of the vehicle facing up the hill is always the same, so that the displacement of the mass component described above can be kept almost constant, which in battery-operated vehicles can minimize the energy requirement during vehicle operation. Minor adjustments to the position of the mass component can be made depending on the position of the center of mass signaled by the sensor module.

The mass component is preferably a solid piece of material, such as a solid piece of iron or lead. However, it is also possible that components of the vehicle are assigned a dual function, namely their actual purpose on the one hand and as moving mass components on the other. An example here would be the use of the vehicle's battery as the mass component.

In accordance with an embodiment, in the vertical direction of the vehicle the center of mass of the mass component is located below the upper edge of the drive wheels. This may have the benefit that the center of mass of the vehicle is sufficiently low so that the risk of the vehicle tipping over, even on steep slopes, is minimized.

In accordance with an embodiment, the sensor module is adapted for determining a lateral inclination of the vehicle and for performing the determination of the position of the center of mass of the vehicle from the inclination. For example, as part of the sensor module on the vehicle, a lateral inclination sensor could be provided which determines the inclination of the vehicle. The sensor module can then determine from the inclination where the lateral center of mass of the vehicle is currently located.

The sensor module is adapted for determining of a weight load of at least one of the wheels and for performing the determination of the position of the center of mass of the vehicle from the weight load. This may have the benefit that due to the direct determination of the weight load of the wheel the realistic load situation of the vehicle is considered. For example, the vehicle could be heavily dirty or grassed at one spot of the vehicle, or the vehicle could be individually loaded with water or fertilizer. All this could lead to a different weight load on the drive wheels of the vehicle on a case-by-case basis. By directly considering the real weight load of the drive wheels, the mass component can be shifted even more specifically in order to achieve a corresponding adjustment of the lateral center of mass of the vehicle.

It has to be noted that generally knowing an absolute reference weight load on the two drive wheels of the vehicle for a given reference lateral inclination, it is sufficient to later on just use the measured weight load on a single one of the drive wheels to determine in the transverse direction the position of the center of mass of the vehicle. Using a single sensor may also be beneficial in saving energy, especially in case a battery powered vehicle is used.

In accordance with an embodiment, execution of the instructions by the processor further causes the controller for controlling the actuator for a movement of the mass component such that the weight load of both wheels is equal. This may be beneficial in that the traction of the vehicle is constant, irrespective of the lateral inclination of the vehicle. This avoids any slippery of a wheel of a vehicle and thus deterioration of the ground due to an insufficient floor loading by one of the wheels.

In accordance with an embodiment, the mass component is displaceable along a guide rail or guide rod oriented in the transverse direction.

In accordance with an embodiment, execution of the instructions by the processor causes the controller to control the vehicle to perform the movable operation with the soil cultivation at least in a sloped subarea of the work area following a scheduled movement trajectory covering the subarea.

The scheduled movement trajectory within the sloped subarea has a zigzag form comprising a plurality of sub-trajectories with mutually opposite directions of movement for climbing the slope of the subarea. For each two sub-trajectories running directly adjacent to one another the direction of the movement of the vehicle is respectively opposite with one direction of movement comprising a forward movement of the vehicle and the other direction of the movement comprising a backward movement of the vehicle.

Controlling the vehicle to follow the zigzag form of the scheduled movement trajectory comprises for each sub-trajectory controlling the vehicle to perform within a first end section of the respective sub-trajectory a first combined climbing operation. The first combined climbing operation combines a first varying climbing operation and a first constant climbing operation. The first varying climbing operation follows a first curved subsection of the respective sub-trajectory. The first constant climbing operation follows a first constant subsection of the respective sub-trajectory and a second endpoint of the first curved subsection coinciding with a first endpoint of the first constant subsection.

Such a varying climbing operation comprises changing an orientation of the vehicle following a curved subsection of the respective sub-trajectory. Starting at a first end point of the respective curved subsection following the curved subsection to a second endpoint of the subsection, a climbing angle continuously increases until a maximum climbing angle is reached at the second end point. The climbing angle is an angle between a tangent touching the curved subsection and a reference tangent touching the curved subsection at the first end point. Such a constant climbing operation comprises maintain a constant orientation of the vehicle following a constant subsection of the respective sub-trajectory. For each two sub-trajectories running directly adjacent to one another the first end sections are located on opposite ends of the respective sub-trajectories.

Embodiments may have the benefit of providing an efficient way of climbing an at least partially sloped work area for the robotic vehicle. By inversing the direction of movement of the vehicle from a forward movement to a backward movement or vice versa rather than inverting the orientation of the vehicle, when ending one sub-trajectory and continuing with a next directly adjacent sub-trajectory, potential problems arising from inverting the orientation of the vehicle may be avoided. An inversion of the orientation of the vehicle may be achieved performing a U-turn. Such a U-Turn may be avoided using the trajectory described above.

Avoiding a U-turn may have the benefit that a small turning radius, i.e. curvature radius, may be avoided. A U-turn with a small turning radius may lead to problems resulting from only a small part of the driving force provided by the driving wheels of the robotic vehicle is directed in a direction tangential to the turning circle, i.e. the direction of movement, and can be used for moving the vehicle forward. A significant part of the driving force may be dissipated in form of a centrifugal force rather than being used for driving the vehicle in the intended direction following the U-turn. When performing such a U-turn on a sloped area, the gravitational force acting on the vehicle is not directed perpendicularly downward relative to the surface of the area, but rather comprises a component directed parallel to the surface and acting against the movement of the vehicle.

In addition, a U-turn may cause problems, since it may comprise an orientation of the vehicle parallel to a maximum gradient of the sloped work area, i.e. the vehicle facing hill upwards in the direction of the steepest slope. Depending on the value of the slope, for a robotic vehicle facing uphill there may arise a risk of toppling over and landing upside down. The risk of toppling over of the vehicle depends on the position of the center of mass of the vehicle relative to the rotational axis of the driving wheels. The smaller the distance between the center of mass and the rotational axis, the higher the risk. The aforementioned risk may be minimized by maximizing the distance. In case of a rear wheel drive, the center of mass of the vehicle may be located in a forward most section of the vehicle. However, increasing the distance between the center of mass and the rotational axis and the driving wheels also increase a momentum directed down the slope, when the vehicle tries to drive parallel to the direction of the steepest slope of the work area, i.e. downhill. In order to counteract this momentum, the vehicle has to constantly generating an inverse momentum of the same value directed uphill. In other words, additional energy has to be dissipated. In other words, in order to optimize the constructive features of the vehicle for a U-turn, problems may be caused for other movements performed by the vehicle following the scheduled movement trajectory over the subarea. By avoiding a U-turn as described above, all the aforementioned problems may be avoided as well.

Embodiments may have the further benefit of using the climbing operations not only for crossing over from one sub-trajectory to another directly adjacent sub-trajectory, but also of preventing problems arising from the necessary temporary stoppage of the robotic vehicle which is an unavoidable part of the inversion of the direction of movement of the vehicle at the ends of the sub-trajectories. A forward movement of the vehicle has to be inverted into a backward movement or vice versa. In order to switch from a forward movement to a backward movement or vice versa, the vehicle has to decelerate in one direction until it stops and to accelerate again from rest in an opposite direction. In case the driving hill upwards, the acceleration from rest in case of on inversion of the direction of movement is supported by the downhill slope force, i.e. a component of the gravity force directed downhill parallel to the surface of the area. However, as illustrated above driving hill upward there may arise a risk of a toppling over of the robotic vehicle. Furthermore, for driving hill upwards more energy is necessary than for driving perpendicular to the slope. Therefore, in order to improve the energy efficiency of the movable operation, when covering the area with a trajectory, the percentage of uphill movements may be minimized and percentage of movements parallel to the slope may be maximized.

By changing the orientation of the vehicle as a part of the varying climbing operations an angle between the intended direction of movement in which the vehicle has to be accelerated from rest and the downhill slope force may be reduced. By reducing the aforementioned angle, the contribution of the downhill slope force may be increased. The orientation of the vehicle is changed until a maximum climbing angle is reached. Starting the varying climbing operations with an orientation of the moving vehicle perpendicular to the downhill slope force the angle between the intended direction of movement and the downhill slope force may be reduced to 90° minus the maximum climbing angle. Starting the varying climbing operation from rest with angle between the direction in which the movement from rest is to be started and the downhill slope force of 90° minus the maximum climbing angle, the orientation of the vehicle may be changed back to an orientation perpendicular to the downhill slope force. In other words, a part of the downhill slope force may always act in the direction of the intended movement, i.e. the direction in the movement from rest is to be started. Thus, the gravity force may support the vehicle when accelerating from rest, reducing the risk of the vehicle getting stuck at the position of rest.

Embodiments may have the further benefit of enabling the vehicle to climb up the hill using the aforementioned climbing operations in a more energy efficient way. Using in addition to varying climbing operations constant climbing operations described above may have the benefit of being more energy efficient. In case of a constant climbing operation a larger part of the driving force, e.g. all the driving force provided by the driving wheels, may be directed in the direction of movement of the vehicle contrary to the varying climbing operations, in case of which only part of the driving force may be directed in the direction of movement.

In accordance with an embodiment, each sub-trajectory further comprises a second end section. The first and second end section are located on opposite ends of the respective sub-trajectory and controlling the vehicle to follow the zigzag form of the scheduled movement trajectory further comprises for each sub-trajectory controlling the vehicle to perform within the second end section of the respective sub-trajectory a second varying climbing operation following a second curved subsection of the respective sub-trajectory

Embodiments may have the benefit that by performing a second varying climbing operation at an opposite end of each sub-trajectory the aforementioned benefits of the gravity force contributing to inversing the direction of movement of the vehicle may be implemented at both ends of the sub-trajectories.

In accordance with an embodiment, for each two sub-trajectories running directly adjacent to one another the second endpoint of the first constant subsection of a first one of the two sub-trajectories coincides with the first end point of the second curved subsection of a second one of the two sub-trajectories.

Embodiments may have the benefit that varying climbing operations may be used for a transition (crossing over) to a given sub-trajectory from a first sub-trajectory running directly adjacent to the given sub-trajectory as well as for a transition from the given sub-trajectory to a second sub-trajectory running directly adjacent to the given sub-trajectory. In particular, it may be pointed out that the aforementioned benefits still hold, when the direction of movement of a given trajectory is inversed. In other words, one and the same trajectory only with inverted direction of movement may be used for climbing up a hill as well as for climbing down a hill taking advantage of the same benefits.

In accordance with an embodiment, controlling the vehicle to follow the zigzag form of the scheduled movement trajectory further comprises for each sub-trajectory controlling the vehicle to perform within the first end section of the respective sub-trajectory a third varying climbing operation following a third curved subsection of the first end section and a second combined climbing operation, the second combined climbing operation combining a fourth varying climbing operation and a second constant climbing operation. The fourth varying climbing operation follows a fourth curved subsection of the respective sub-trajectory. The second constant climbing operation follows a second constant subsection of the respective sub-trajectory and a second endpoint of the fourth curved subsection coinciding with a first endpoint of the second constant subsection. For each sub-trajectory a first endpoint of the third curved subsection of the respective sub-trajectory coincides with the second endpoint of the first constant subsection of the respective sub-trajectory and a second endpoint of the third curved subsection of the respective sub-trajectory coincides with the first endpoint of the fourth curved subsection of the respective sub-trajectory.

Embodiments may have the benefit that a percentage of the subarea which remains uncultivated may be minimized. Due to the inversion of the direction of movement at the boundaries of the sub-trajectories, the trajectory in general comprises at least for some of the boundaries no sub-trajectories extending directly along the respective boundaries. Thus, at those boundaries in general uncultivated, in case of a lawn mower uncut, portions of the subarea may remain due to geometrical restrictions on the range of soil cultivation of the vehicle. These geometrical restrictions of range may depend on the geometrical design as well as modus operandi of cultivation instruments used by the vehicle for performing the soil cultivation. For example, in case of mowing a lawn a rotating mower blade is used such that, due to the restriction to a circular geometry, a mowing track of the lawn mower at the ends of each sub-trajectory will comprises a circular shape. By adding a curved as well as a combined climbing operation at the ends of the sub-trajectories, the climbing may be performed in smaller steps and a higher rate of coverage of the soil cultivation at the boundaries of the sloped subarea may be implemented. Due to the increased rate of coverage, otherwise uncultivated intermediate portions of the subarea may be cultivated, e.g. mowed, as well. Thus, a percentage of the area remaining uncultivated per sub-trajectory relative to a maximum area of soil cultivation reach of the robotic vehicle at rest may for example be reduced from circa 14% to circa 4%. In case of a lawn mower with a rotating mower of length $L = 2 * r_{max}$ cutting a circular area of lawn around an axis of rotation of the mower blade with radius $r_{max}$, the maximum area Amax of soil cultivation reach of the robotic vehicle is $A_{max} = r_{max}^2 * \pi$. The additional climbing operations used to cover remaining uncultivated portions of the subarea may have all the benefits described above for the climbing operation.

In accordance with an embodiment, for each two sub-trajectories running directly adjacent to one another the second endpoint of the second constant subsection of a first one of the two sub-trajectories coincides with the first end point of the second curved subsection of a second one of the two sub-trajectories. Embodiments may have the benefit that even in case of using additional climbing operations for increasing the percentage covering, for each two sub-trajectories running directly adjacent to one another the end of a climbing operation of the first one of the two sub-trajectories coincides with the beginning of a climbing operation of the adjacent sub-trajectory.

In accordance with an embodiment, controlling the vehicle to follow the zigzag form of the scheduled movement trajectory further comprises for each sub-trajectory controlling the vehicle to inverse the direction of movement of the vehicle, when reaching the second endpoint of the second constant subsection of the respective sub-trajectory, and to inverse the direction of movement of the vehicle, when reaching the second endpoint of the second constant subsection of the respective sub-trajectory.

In accordance with an embodiment, controlling the vehicle to follow the zigzag form of the scheduled movement trajectory further comprises for each sub-trajectory controlling the vehicle to inverse the direction of movement of the vehicle, when reaching the second endpoint of the first constant subsection of the respective sub-trajectory.

In accordance with an embodiment, for one or more of the sub-trajectories, the first endpoint of the first curved subsection of the first end section of the respective sub-trajectory and the second endpoint of the second curved subsection of the second end section of the respective sub-trajectory coincide. Embodiments may have the benefit that one or more of the sub-trajectories only comprise climbing operations, thereby minimizing a width of the respective sub-trajectories. Thus, all the aforementioned benefits may be applied even to narrow sloped subareas, which besides the climbing operations do not allow for further movements parallel to the slope of the subarea.

Furthermore, such sub-trajectories may be used to climb narrow sloped passages between separated subareas of a work area without performing a soil cultivation. For example, in case of a lawn mower, a work area may comprise different subareas which are distributed around an obstacle, like a house. Some or all of these subareas may not be connected by a portion of the work area, but rather only be accessible via passages within which the respective soil cultivation, i.e. lawn mowing, is not to be applied. Nevertheless, in case one or more of these passages comprise a steep slope, which prevents the robotic vehicle from passing the respective passage following a trajectory parallel to the direction of slope, the trajectory with a zigzag form as described above may be used to successfully climb the respective passage. This may in particular be the case, if the narrow passage does not allow for U-turns. U-turns may be non-executable due to the value of the slope and/or the narrowness of the passage.

The aforementioned may hold true for climbing up as well as climbing down such narrow passages. In general, robotic vehicles, like lawn mowers, do not comprise active brake systems, like a car. Climbing down a narrow slope using the aforementioned zigzag form comprising only climbing operations may thus have the benefit that the robotic vehicle is prevented from accumulating too much velocity, which may cause problems when coming near the boundaries of the passage. Such boundaries may for example comprise obstacles like walls or plants, e.g. flowers, which could be damaged in case of a collision with the robotic vehicle. The robotic vehicle may comprise an electric motor, which may be configured to decelerate the vehicle using suitable control commands. However, such a deceleration may be less efficient and effective than a deceleration achievable by an active brake system.

In accordance with an embodiment, one or more of the sub-trajectories further comprise a middle section, wherein a first end point of the middle section coincides with the first endpoint of the first curved subsection of the first end section of the respective sub-trajectory and a second end point of the middle section coincides with the second endpoint of the second curved subsection of the second end section of the respective sub-trajectory.

Embodiments may have the benefit of enabling an efficient coverage of slope subareas. The of the middle section may be adapted to the width of the sloped subarea perpendicular to the slope. In case of a larger width of the subarea, longer middle sections may be used. In case of a smaller width of the subarea, smaller middle sections may be used. In accordance with an embodiment, the trajectory may comprise middle sections of different length. By selecting middle sections with different lengths, the shape of the area covered by the trajectory may efficiently be adapted to a shape of the subarea.

If one or more of the middle sections extend perpendicular to the slope of the subarea, i.e. the robotic vehicle constantly moving perpendicularly to the gravity force, the influence of the gravity force on the driving of the robotic vehicle may be minimized. In this case, all the points of the middle section may be points of equal height above a common reference level, e.g. sea level. Embodiments may have the benefit of implementing an energy efficient movement, since the effects of the gravity force may be directed perpendicular to the direction of movement, i.e. forward or backward, this allows to minimize gravitational effects in total.

In accordance with an embodiment, each of the middle sections comprises a third constant subsection. In accordance with an embodiment, one or more of the middle sections extend parallel to each other. Embodiments may have the benefit of providing a full coverage of the subarea using an efficient geometrical form for the trajectory.

In accordance with an embodiment, the vehicle follows the zigzag form of the movement trajectory to climb down the slope of the subarea. Embodiments may have the benefit that the trajectory provides an efficient and save way for climbing down the slope of the subarea. For the first and/or second constant subsections of the sub-trajectories an angle with a line perpendicular to the gradient of the sloped subarea, i.e. the direction of the slope, may be equal to a first and second maximum climbing angle, respectively. Following the first and/or second constant subsections may enable a movement using the maximum climbing angle in a downhill direction. Thus, following the first and/or second constant subsections downhill may allow a maximum support of the movement by the downhill slope force. On the other, since the constant climbing operations in case of climbing down the slope are each followed by a varying climbing operation, the robotic vehicle may effectively be prevented from being over-accelerated. The varying climbing operation may contribute to decelerating or at least limiting the acceleration of the robotic vehicle.

In accordance with an embodiment, the vehicle follows the zigzag form of the movement trajectory to climb up the slope of the subarea. Embodiments may have the benefit of providing an efficient way of climbing up a sloped subarea. Even subareas with a steep slope may be covered efficiently, while climbed up hill upwards. Most of the movement may be executed in a direction perpendicular to the slope of the subarea. Furthermore, by inverting the direction of movement all occurring maximum climbing angles may be restricted to significantly less than 90°. Thus, any movement parallel to the slope and thus any full influence of the downhill slope force on the movement of the robotic vehicle may be prevented.

In accordance with an embodiment, a rate of increasing of the climbing angles of the varying climbing operations continuously increases until the maximum climbing angle is reached. Embodiments may have the benefit that the vehicle may be constantly turned, while moving forward or backward. Thus, the motion of the vehicle may be used to support the turning, minimizing the risk of getting stuck.

In accordance with an embodiment, a maximum climbing angle $\alpha_{max}$ of the varying climbing operations is within a range from 5° to 40°, preferably from 10° to 35° or 15° to 30°. Embodiments may have the benefit that on the one hand the downhill slope force may be used for preventing the robotic vehicle from getting stuck and on the other hand a too large influence of the downhill slope force on the movable operation of the robotic vehicle may be prevented.

In accordance with an embodiment, for each two sub-trajectories running directly adjacent to one another a maximum distance $D_{max}$ between the two sub-trajectories is $D_{max} = c_1 * W$ with W being a maximum range of soil cultivation of the vehicle perpendicular to the direction of movement of the vehicle and $c_1$ being a parameter within a range from 0.3 to 0.7, preferably from 0.4 to 0.5 or from 0.45 to 0.55. Embodiments may have the benefit that a suitable distance between the middle sections of adjacent sub-trajectories with a constant overlap between the soil cultivation operations performed within the middle sections of adjacent sub-trajectories may be ensured. Furthermore, an occurrence of uncultivated sections between adjacent sub-trajectories may be prevented. In case of $c_1 = 0.5$, it may be ensured that the soil cultivation is actually applied to the subarea twice.

In accordance with an embodiment, a minimum curvature radius $R_{min}$ of the curved subsections of the sub-trajectories is $R_{min} = c_2 * W$ with $c_2$ being a parameter within a range from 2 to 5, preferably 3 to 4. Embodiments may have the benefit that the minimum curvature radii of the varying climbing operations are efficiently limited. Thus, small curvature radii with a high level of energy dissipation may be avoided, saving energy and preventing the risk of getting stuck of the robotic vehicle. Furthermore, abrupt changes of direction of movement of the robotic vehicle may be avoided.

In accordance with an embodiment, the first constant subsection of the sub-trajectories comprises a length $L_1 = c_3 * W$ with $c_3$ being a parameter within a range from 0.6 to 1.3, preferably 0.7 to 1.2, and the second constant subsection of the sub-trajectories comprises a length $L_1 = c_4 * W$ with $c_4$ being a parameter within a range from 0.6 to 1.3, preferably 0.7 to 1.2. Embodiments may have the benefit that the first and/or the second constant subsections comprise a suitable length for implementing the aforementioned benefits without moving uphill or downhill too far. In particular, a sufficient overlap of the tracks of soil cultivation of sub-trajectories running directly adjacent to one another may be ensured.

In accordance with an embodiment, a center of mass of the vehicle is located within a rearmost third of a longitudinal axis of the vehicle. In accordance with an embodiment, along the longitudinal axis of the vehicle a distance $D_{cm}$ between the center of mass of the vehicle and a common rotational axis of two rear driving wheels of the vehicle is $D_{cm} = c_5 * D_{rw}$ with $D_{rw}$ being a distance between the two rear driving wheels and $c_5$ being less than 0.25, preferably 0.1 or 0.07. Embodiments may have the benefit of reducing the amount of energy necessary to counteract the influence of gravity when moving perpendicular to the direction of a slope of the subarea. Please note that this beneficial configuration of the robotic vehicle may be implemented without other drawbacks, since U-turns are avoided by zigzag form of the trajectory. Thus, the risk of a toppling over of the robotic vehicle landing with it upside down, when the robotic vehicle moves parallel to the direction of the slope of the subarea, may efficiently be avoided.

In accordance with an embodiment, the scheduled movement trajectory is used for the movable operation within the subarea, in case an averaged slope of the subarea exceeds a threshold of 15%, preferably 20% or 25%.

In accordance with an embodiment, the work area is represented by a set of discretized coordinate grid points and the execution of the instructions by the processor further causes the vehicle to plan the movable operation. The planning comprises clustering of at least some of the grid points, the clustering resulting in sets (of clusters) comprising some of the grid points, each set representing a subarea of the work area. For a given one of the sets each of the grid points preferably has at least one immediately adjacent grid point in the respective set and for all grid points in the sets a value of a parameter characterizing the soil represented by said grid points satisfies a soil criterion for performing the movable operation, wherein e.g. the performing of the movable operation is based on the sets of grid points. Execution of the instructions by the processor further causes the vehicle for performing the movable operation based on the sets of grid points. Generally, each grid point represents a respective area segment, i.e. tile, of the work area.

Embodiments may have the benefit that the movable operation is performed in an efficient manner. Efficiency relates for example to an energy efficiency of the operation, the accuracy of the operation or an efficiency in the care of the soil. For example, the soil is only cultivated if this is necessary at all with regard to the soil properties, whereby the cultivation then actually only takes place for those areas of the soil where the necessity is given. If, for example, the cultivation of the soil involves mowing grass, only those areas of the work area for which a mowing operation makes sense at this time are mown at a certain point in time. If, for example, a cutting height of 5 cm is planned, then those areas could be omitted which have grass with a height of less than 5 cm, since in these areas a grass cut would not take place through the vehicle, which could accelerate the mowing process overall.

In order to permit the robotic vehicle to determine at which grid point it is actually located, a GNSS based location determination is possible. Alternatively or additionally, any kinds of optical systems, acoustical systems and beacon guidance systems may be used for that purpose. Further, if available, a deduced reckoning navigation device of the vehicle may be used for that purpose.

The planning of the movable operation comprises scheduling the movable operation for obtaining a movement trajectory of the vehicle for performing the movable operation, the scheduling comprising selecting multiple ones (i.e. at least two) of the sets of clustered grid points, the movement trajectory comprising the grid points of the sets of clustered grid points.

It should be noted at this point that clustering, e.g. according to the criterion of a uniform speed of grass growth as the parameter characterizing the soil, could lead to individual grid points not being part of the cluster within an area of the work area in which clustered grid points are located. In extreme cases, for example, every n-th (n being an integer number > 1) grid point within this area could be stochastically excluded from the cluster. This could, for example, be due to the fact that there is a certain error scatter for individual grid points when recording the growth rates of the cluster. For this reason, such an error scatter can be taken into account in the subsequent scheduling so that, in addition to the clustered grid points, unclustered grid points located between the clustered grid points of a set, e.g. unclustered grid points that have at least one immediately adjacent clustered grid point in that set, also become part of the planned movement trajectory of the vehicle.

This may have the benefit that either starting from the desired point in time for example set by a user the actual movable operation is performed, or that the scheduling itself is selecting a most suitable starting point in time based on the clustered grid points starting from which the movable operation can be performed in e.g. a rather efficient manner. For example, an efficient manner would be a manner in which in a consecutive way the majority of clustered grid points of the sets can be covered by a single movement trajectory. Instead of only considering a single cluster alone and scheduling the movable operation for obtaining a movement trajectory for that cluster, all sets of clusters are considered in a coherent way. This would allow efficient processing of the work area.

For example, the clustering may result in 3 sets (i.e. clusters) of grid points that share a common similar value of a parameter characterizing the soil. One approach would be to schedule the movable operation for obtaining a movement trajectory for one of the clusters, perform the movable operation based on that schedule and then to reschedule the movable operation for obtaining a movement trajectory for a next one of the clusters. However, this may be computationally more expensive than to schedule a single movable operation for obtaining a movement trajectory for all of the clusters. This should speed up the total movable operation since it can be optimized and scheduled considering all the clusters. Further, since computational effort is a critical issue in case of battery powered devices like the vehicle and since the vehicle does the scheduling, the scheduling of the single movable operation for obtaining a movement trajectory for all of the clusters supports a prolonged lifetime of the vehicle's battery.

Generally, the clustering results in groups (sets) of grid points that have a maximum small spatial distance between the grid points, also called dense areas. This may also be expressed by means of a particular narrow statistical distribution of distances between the grid points of a cluster.

In accordance with an embodiment, the movement trajectory obtained for a single contiguous movable operation results in a fragmentation degree of the work area, the fragmentation degree describing the degree of fragmentation of the work area with respect to subareas of the area covered by the trajectory, wherein in case the fragmentation degree is above a predefined fragmentation threshold, the soil criterion is successively relaxed within specified limits until the degree of fragmentation is below the predefined fragmentation threshold.

Fragmentation is understood as follows: if the subareas of the area covered by the trajectory are not continuously and without gaps covered by the trajectory, but there are "pieces of uncovered subareas (fragments) between them, this is understood as a fragmentation.

This may have the benefit that in contiguous manner at rather large part of the work area can be processed by means of the movable operation in a quick manner. Instead of having the vehicle performing the movable operation on the individual sets of clustered grid points each separated by respective unprocessed gaps in the work area, the movable operation may therefore be performed in quicker non-interrupted manner. It has to be noted here that each interruption of the movable operation will require, that the vehicle has to perform additional movements in order to compensate for this interruption.

In accordance with an embodiment, the grid points of the set of grid points are distributed over a portion of the work area, the parameter characterizing the soil comprising a slope of the work area, wherein the soil criterion is a minimum average slope of the portion. For example, the minimum average slope is larger than 15%, preferably larger than 20% or 25%. This may have the benefit that the time and/or energy efficiency at which the work area is processed is increased. For example, the moving speed of the vehicle may be reduced for a slope area such that the vehicle has more time to compensate for drag forces dragging the vehicle down the slope. Even though the slower motion of the vehicle may cause the vehicle more time to travel the slope, a repeated processing the slope could be avoided. The repeated processing could result from inaccurate processing of the soil due to the drag forces involved. For example, the vehicle could deviate from its intended trajectory due to the drag forces and lack of compensation speed, so that parts of the ground could remain unprocessed.

In accordance with an embodiment, the movement trajectory is comprising a zigzag form of the trajectory with mutually opposite directions of movement, wherein for two parts of the trajectory running directly adjacent to one another the direction of the movement of the vehicle is respectively opposite with one direction of movement comprising a forward movement and the other direction of the movement comprising a backward movement of the vehicle.

This may have the benefit that the movable operation can be performed in an energy efficient and/or a soil-friendly way. Assuming a rather steep slope, any movement of the vehicle in the direction of the gradient of that slope at a certain grid point may require a lot of engine power of the vehicle to overcome the slope downforce (the gradient points in the direction of the greatest rate of increase of slope at a given point). In addition, the torques applied to the ground by the wheels could cause the wheels to spin, which could damage the ground at this certain grid point. By the zigzag drive and the alternating forward and backward movement of the vehicle excessive turns of the vehicle could be avoided, so that e.g. at no time the vehicle will drive in the direction of the gradient of the slope acting at the appropriate certain grid point.

In accordance with an embodiment, the parameter characterizing the soil is selected from a growth rate of plants to be cultivated and a slip of the vehicle's wheels to be used for the movement of the vehicle on the work area for performing the movable operation. The soil criterion is a selected range of the value of the parameter characterizing the soil, i.e. a selected range of growth rates of the plants or a selected range of slips of the wheels.

Generally, slip is the relative motion between the drive wheel of the vehicle and the soil surface it is moving on. The slip can be generated either by the wheel's rotational speed being greater or less than the free-rolling speed (usually described as percent slip), or by the wheel's plane of rotation being at an angle to its direction of motion (referred to as slip angle). Generally, high traction between wheel and soil is more desirable than low traction, as it allows for movement even on steep slopes without wheel slippage.

Embodiments may have the benefit that a performance of the movable operation e.g. for cultivating the plants is restricted to areas of the plants which indeed require the cultivation. Instead of for example randomly moving around and e.g. trying to cut the plants, e.g. grass, to a certain length, even though no cutting may be required since the plants have not yet grown to that length, only cultivation on a real per-need basis may be performed. In another example there may be areas with fast growing plants and other areas with slow growing plants. By means of the above-described method the frequency at which the fast-growing plants are cultivated may be "automatically" set higher than the frequency at which the slow growing plants are cultivated.

With regard to the slippage of the wheels of the vehicle, one advantage could be that it would prevent any stirring of the ground due to the slippage. However, since this may require a somewhat adapted driving style of the vehicle, such an optimization is not carried out for the entire work area, but only for those areas for which such a risk of wheel spin is actually present.

In accordance with an embodiment, each grid point has associated a respective value of the parameter characterizing the soil, the clustering comprising a cluster analysis of the parameter values characterizing the soil for identifying groups of ranges of parameter values characterizing the soil, the selected range of the parameter values characterizing the soil being selected from the groups of ranges. For example, 3 clusters of ranges of growth rates of plants could be defined and clustering could be performed with respect to the growth rate given for each grid point.

The determination of the groups or ranges may be performed using e.g. k-means clustering or hierarchical clustering. Generally, cluster analysis has plenty of tools to automate clustering of data such that by means of the cluster analysis the definition of groups of ranges can be adapted to the actual real distribution of values of parameters for the grid points. For example, depending on the time of the season of the year, for all grid points the growth rate of plants may increase of decrease. Instead of using fixed ranges for growth rates which would not consider an overall change in growth rate, the cluster analysis provides a tool to flexibly adapt the ranges to the actual real growth situation.

In accordance with an embodiment, each grid point has associated a respective value of the parameter characterizing the soil, e.g. the growth rate of the plants to be cultivated and located at said grid point or the slip at said point. Execution of the instructions by the processor further causes the vehicle for performing a parameter value prediction, e.g. a growth rate prediction comprising for a given one of the grid points: receiving data valid for said given grid point and being related to the parameter characterizing the soil, e.g. the growth rate of the plants to be cultivated and located at said grid point, and adapting the parameter value characterizing the soil (e.g. the growth rate) associated with the given grid point based on the received data. This may have the benefit that the respective values of the parameter characterizing the soil are not considered as being constant and fixed, but that a certain variability regarding these values is permitted.

For example, the data may comprise data on an environmental factor valid for said given grid point and affecting the parameter characterizing the soil, e.g. the growth rate of the plants to be cultivated and located at said grid point or the slip. The environmental factor may be selected from: sunshine hours, rainfall, soil moisture, fertilization, season, environmental temperature, wind speed, wind direction, air humidity.

For example, the slip may of the vehicle's wheels may vary depending on the wetness of the soil, wherein the slip may also vary in between areas which are exposed to direct and indirect rainfall. The wetness of the soil may also affect the growth rate of plants and different plants in different areas (grid points) may change their growth rate differently even though they are subject to the same amount of rainfall. Generally, it may be known that during certain times of seasons the plant growth may be denser than during other times of seasons, which may also affect the slip of the vehicle's wheels. Sunshine duration and the sun inclination will affect how fast the soil and the plants comprised by the soil (e.g. grass) will dry out which will have a direct effect on the plant's growth rate.

It has to be noted that the data on the environmental factor may either be "live" data, i.e. data reflecting the actual environmental situation of a grid point, or it may be "forecasted" data, i.e. data that provides an assumption on the environmental situation of a grid point for a certain point in time in future. The latter may have the benefit that a clustering can be performed with respect to a precise future planning being possible regarding the performing the movable operation.

The data on the environmental factor may be obtained by the vehicle in various ways. One example is a data measurement by respective sensors of the vehicle or sensors that are located somewhere in close vicinity to the vehicle. The data may be transmitted to the vehicle wirelessly. Another example is that the data is obtained from external resources like weather services via e.g. the internet.

In accordance with an embodiment, the data is comprising a deviation in the value of the parameter characterizing the soil as determined by the vehicle using a comparison of an expected value of the parameter and an actual value of the parameter as measured by the vehicle, both valid for said given grid point. This may have the benefit that the accuracy of the clustering is enhanced by considering real data instead of only making assumptions on e.g. growth rates. For example, growth rates for plants may be estimated using a model. By means of the deviation in the value of the parameter characterizing the soil the model may be tuned or improved over time such that the accuracy of the determination of the growth rates for the grid points may be significantly enhanced. The same holds regarding the slip of the vehicle's wheels which may also be predicted using respective models.

In accordance with an embodiment, the movable operation is comprising a grass cutting operation, the actual growth height being measured by the vehicle during performing the movable operation, e.g. while moving on the trajectory, the measurement of the growth height being performed using at least any of an optical sensor and the power consumption of the motor used to cut the grass. The grass height has a direct effect on the power consumption of the motor - the higher the grass, the higher the power consumption.

In accordance with an embodiment, the scheduling is comprising determining a cultivation point in time for performing the movable operation, the determination of the cultivation point in time being based on: at least some of the values of the parameter characterizing the soil associated with the grid points of the selected one or more of the sets of clustered grid points and a soil parameter threshold required for performing the movable operation, wherein the soil parameter threshold is a threshold of the values of the parameter characterizing the soil. For example, in case of growth rates used as the parameter characterizing the soil, the determination of the cultivation point in time is based on at least some of the growth rates of the plants associated with the grid points of the selected one or more of the sets of clustered grid points and as soil parameter threshold a minimum growth height of plants required for performing the movable operation. For example, in case of the slip being used as the parameter characterizing the soil, the determination of the cultivation point in time is based on at least some of the slip values associated with the grid points of the selected one or more of the sets of clustered grid points and as soil parameter threshold a maximum slip value permitted for performing the movable operation.

In this context, the formulation "based on at least some of the values of the parameter characterizing the soil" may be understood as selecting a suitable approach like the minimum or the maximum or the average of said values of the parameters.

In accordance with an embodiment, the values of the parameter characterizing the soil are comprising values of the slip of the vehicle's wheels associated with the grid points of the selected one or more of the sets of clustered grid points, wherein in case the specific slip value does not satisfy the soil parameter threshold, the cultivation point in time is delayed compared to the case when the specific slip value does satisfy the soil parameter threshold. For example, in this scenario the soil parameter threshold is a maximum of e.g. 10% slip. This means that in case of a slip below 10% a respective specific slip value does satisfy the soil parameter threshold. In case of e.g. an average of 15% slip with regard to all grid points of the selected one or more of the sets of clustered grid points, this would not satisfy the soil parameter threshold such that in this case the cultivation point in time is delayed. The purpose of the delay may be that for example the soil is only cultivated once in a while, such that the stress on the soil caused by driving on the floor stays minimized.

In accordance with an embodiment, execution of the instructions by the processor further causes the vehicle for each grid point of a subset of the grid points at different first points in time performing an initialization process, the initialization process comprising determining by the vehicle the value of the parameter characterizing the soil represented by said grid point. For example, during the initialization process the vehicle randomly moves over the work area and collects information regarding the value of the parameters characterizing the soil. This does not necessarily mean that for each and every grid point the information regarding the value of the parameters characterizing the soil has to be acquired, e.g. measured by optical means or by traction tests carried out by the wheels of the mower. It is possible to for example interpolate the values of the parameters characterizing the soil for grid points uncovered by the measurements of the vehicle based on the values of the parameters acquired for the grid points.

In accordance with an embodiment, the vehicle is comprising a Global Navigation Satellite System, GNSS, receiver, the initialization process further comprising: receiving at the first point in time a first set of GNSS signals from a vehicle base; receiving at the first point in time a second set of GNSS signals from the GNSS receiver; determining an accuracy of a location determination, the location determination being based on the second set of GNSS signals, the determination of the accuracy being based on a comparison of the signal qualities of the first set of GNSS signals and the second set of GNSS signals.

The "vehicle base" is understood as a fixed base comprising a GNSS receiver for receiving the first set of GNSS signals. The purpose of the vehicle base may be manifold. For example, the base could serve as a shelter for the robot to protect it from the weather when the robot is not in use. The base could serve as a charging station for the robot. Or the base could serve as a reference position for the robot, in which case the exact position of the base should preferably be known. In this case a later exact position determination of the robot via differential GNSS (especially differential GPS) is possible. Differential Global Positioning Systems (DGPS) are e.g. enhancements to the Global Positioning System (GPS) which provide improved location accuracy, in the range of operations of each system. A fixed ground-based reference station may be used to broadcast the difference between the positions indicated by the GPS satellite system and its known fixed position. Receiver stations may correct their positions based on that difference.

GNSS signals may be signals originating from satellites of the GPS, GLONASS, Galileo or BeiDou system. The GNSS positioning for obtaining a receiver's position is derived through various calculation steps. In essence, a GNSS receiver measures the transmitting time of GNSS signals emitted from four or more GNSS satellites and these measurements are then used to obtain its position (i.e., spatial coordinates) and reception time.

It has to be noted that that location determination does not have to be performed in such a manner that a real spatial position is obtained from that. It may be sufficient to calculate the uncertainty that may exist in case a determination off the spatial position from the second set of GNSS signals would be performed. Typically, trilateration is used for GNSS based spatial position determination, wherein for the above-described accuracy determination it may be sufficient to know "size" of the zone of uncertainty the spheres in trilateration will intersect.

In order to permit the robotic vehicle to determine at which grid point it is actually located, either the second set of GNSS signals may be used for that purpose or other means may be used that permits to determine the actual location of the vehicle. For example, any kinds of optical systems, acoustical systems and beacon guidance systems may be used for that purpose. Further, if available, a deduced reckoning navigation device of the vehicle may be used for that purpose.

Embodiments may have the advantage, that the accuracy of a location determination is available at rather high accuracy. The accuracy of GNSS data may depend on many factors. One source of errors in the GNSS position accuracy originate from multipath effects. Multipath occurs when part of the signal from the satellite reaches the receiver after one or more reflections from the ground, a building, or another object. First at all, these reflected signals can interfere with the signal that reaches the receiver directly from the satellite. Second, due to the range delay in multipath due to the result of the reflection of the GNSS signal the position as determined using such a multipath signal is falsified. Another source of errors are weak signals. Signals from other high-frequency transmitters can interfere with the GNSS receiver even at low field strengths, resulting in measurement errors and interference from high-frequency signals. Potential sources of interference may for example include harmonics of the transmission frequencies of TV and radio transmitters, mobile telecommunication system networks and radar transmitters.

By comparing the signal qualities of the first set of GNSS signals and the second set of GNSS signals the (hypothetical) accuracy of a location determination based on the second set of GNSS signals is not solely relying on this second set of GNSS signals but also considers the first set of GNSS signals. The signal qualities like signal-to-noise ratios or signal intensities of the first and second set of GNSS signals may permit to identify and omit parts of the second set of GNSS signals that are of low quality, i.e. that may be multipath signals, signals disturbed by interreference with other non-GNSS-based signals etc.

In one example, an obstacle may shadow GNSS reception partially at a certain grid point and point in time. In case the accuracy of location determination would solely be based on the second set of GNSS signals, such a grid point may erroneously be evaluated as a good grid point which position is reliably determinable using GNSS signals, even though the respective position determination would be rather imprecise due to multipath errors and interreferences. By additionally considering the first set of GNSS signals that was recorded at that point in time, e.g. multipath errors can be easily detected due to the spatial distance of the vehicle base GNSS receiver from the vehicle GNSS receiver and most probably the absence of similar GNSS signal reflections at the vehicle base and the GNSS receiver.

For example, execution of the instructions by the processor causes the vehicle for performing the movable operation based on the determination of the accuracy.

In accordance with an embodiment, execution of the instructions by the processor further causes the vehicle for performing the planning the movable operation based on at least some of the grid points for which an accuracy of the location determination is available and the accuracy of the location determination.

This may have the benefit that navigation of the vehicle for performing the movable operation like e.g. mowing a lawn can be performed at a rather high precision since only grid points are considered here for which it can be made sure that an accuracy of the location determination is available. For example, by considering the accuracy of the location determination only such grid points may be traveled during the movable operation for which a certain minimum quality of navigation preciseness can be met.

In accordance with an embodiment of the invention the first and second GNSS signals are received from satellites that are located at certain satellite positions in the sky above the base and the vehicle, the comparison of the signal qualities of the first set of GNSS signals and the second set of GNSS signals resulting in a quality number per satellite position. This may permit to have a basis for evaluating the quality of a certain satellite position for e.g. usage of the respective satellite GNSS signals for the accuracy determination of the location determination.

In accordance with an embodiment, execution of the instructions by the processor causes the vehicle further for performing a predicting process for at least some of the grid points, the predicting process forecasting the accuracy of a location determination for points in time future to the respective first point in time. This may be beneficial in case during the initialization process some of the coordinate grid points of the work area were missed or not covered. By means of the predicting process it may be possible to obtain a contiguous area on which the vehicle can operate. The predicting process may be the same process that is used to adapt the parameter value characterizing the soil associated with the given grid point based on the received data.

In accordance with an embodiment, the predicting process forecasting the accuracy of the location determination for at least some of the grid points of the subset is using at least one of GNSS Ephemerides, Almanacs and satellite repeat cycles applied on the first or second set of GNSS signals received at the respective first point in time. Broadcast ephemerides are forecasted, predicted, or extrapolated satellite orbits data which are transmitted from the satellite to the receiver in the GNSS signal. Alternatively or additionally daily GNSS broadcast ephemeris files may be used which may be downloaded e.g. via a wide area network and which a merge of the individual GNSS data files into one file. Compared to GNSS ephemerides, the GNSS almanacs contains less accurate orbital information than ephemerides, however with longer validity. The repeat cycle of a describes the fact that a satellite generally follows an elliptical path around the Earth. The time taken to complete one revolution of the orbit is called the orbital period. The satellite traces out a path on the earth surface, called its ground track, as it moves across the sky. As the Earth below is rotating, the satellite traces out a different path on the ground in each subsequent cycle. The time interval in which nadir point of the satellite passes over the same point on the Earth's surface for a second time (when the satellite retraces its path) is called the repeat cycle of the satellite.

Any of these GNSS Ephemerides, Almanacs and satellite repeat cycles may be used to predict at which point in time in the future a satellite constellation may be available again that in a certain manner reflects the satellite constellation for the given grid point that was given during the initialization phase. This may permit a reliable and easy future planning of future movable operation of the vehicle. Simply spoken, in case for certain satellite constellation at a certain the grid points and time the accuracy of location determination that was considered as being a good, this fact can be used at the future point in time thus also knowing in that in that future point in time the quality of position determination of the vehicle will be also good.

In accordance with an embodiment, the predicting process forecasting the accuracy of the location determination is comprising: forecasting a reception of first or second GNSS signals for said points in time future to the first point in time from satellites located at a sky area around the certain satellite positions, the accuracy of the location determination being forecasted using the forecasted reception of the first or second GNSS signals.

This may have the benefit that only GNSS signals originating from satellites and is sky area in close vicinity to the certain satellite positions are used for forecasting the reception of the first and second GNSS signals for a future point in time. As mentioned above, this may permit a reliable and easy future planning of future movable operation of the vehicle.

For example, per satellite position the forecasting of the accuracy of the location determination is performed using either the forecasted reception of the first GNSS signals weighted by the quality number of that satellite position or the forecasted reception of the second GNSS signals excluding GNSS signals from satellite positions for which the quality number does not fulfill a first minimum quality criterion.

Here, the first alternative realizes that certain first GNSS signals may be blocked at the grid point due to obstacles. Blocking may be only partially or completely, which however has certain negative effect on the quality of position determination. The weighting of a first GNSS signal received from certain satellite position with the quality number of that satellite position therefore accounts for that possibility that in the end that satellite position may be partially or fully shadowed and therefore not be fully available for a high-quality location determination. The quality number may for example be a ratio between the second GNSS signal and the first GNSS signal intensities or S/N-ratios. Any other means that reflect the quality of a received signal may also be employed here.

In the second alternative only the second GNSS signals our used, however with the limitation that GNSS signals are excluded in case the quality number does not fulfill certain first minimum quality criterion. This may have the benefit that satellite signals are excluded from any forecasting of signal receptions from which it is known that they may negatively influence the location determination procedure.

In accordance with an embodiment, the sky above the base and the vehicle is represented by a set of discretized zones, the sky area around a certain satellite position being confined by the boundaries which confine the zone in which the satellite position is located. For example, the sky above the GNSS receiver of the vehicle may be projected onto a 2D matrix represented by a coordinate grid, the coordinate grid forming individual zones. A skyplot provides the possibility to represent satellite positions within such a 2D matrix in a polar projection. The position of the satellite inside the outer circle of such a skyplot indicates the two angles azimuth and elevation. The azimuth may be drawn as central angle and the elevation may be provided as circle radius. Different elevations may correspond to individual grid circles of respectively different diameters. The individual azimuth angles may be represented as lines originating from the center of the skyplot towards the outer circle. These lines therefore also correspond to parts of the coordinate grid. In total, the coordinate grid is made up of the circles and the lines.

By using a skyplot it is not necessary to just rely on a single exact satellite position in the sky but to account for the fact that certain variation of the given satellite position in the sky around that satellite position will not significantly affect the total quality of location determination in case the reception conditions of signals from this satellite position was considered as being good or sufficient enough.

In accordance with an embodiment of the invention, the predicting process is further comprising determining a sky area of good reception which comprises at least some of the certain satellite positions for which the quality number of that satellite position fulfills a first minimum quality criterion, the sky area around a certain satellite position being confined by the boundaries which confine the sky area of good reception. This may be beneficial in case the higher number of satellites are available for which the quality of signal reception is rather good. In case the satellites are evenly distributed over the sky, certain shadow areas may be easily the identifiable. In the case from the satellite positions for which the quality number fulfills the first minimum quality criterion it is possible to draw as a contour line regarding the shadowed area, any position the of the sky outside the shadow area can be considered as the area of good reception. As a consequence, it may again not be necessary to just rely on a single exact satellite position in the sky but to account for the fact that a variation of location of the satellite positions within the area of good reception in the sky will not significantly (if at all) affect the total quality of location determination.

In accordance with an embodiment, the determination of the accuracy of the location determination is only considering GNSS signals from satellite positions for which the quality number of that satellite positions fulfills a first minimum quality criterion. This principle may be applied as a general rule within the whole described process as it may ensure that the determination of the accuracy of the location determination is only performed with the respect to signals that meet a certain quality. It has to be noted that the quality number may comprise, as described above, a ratio between the second GNSS signal and the first GNSS signal intensities or S/N-ratios.

The quality number may also rate the position of the individual satellites in the sky. For that purpose, a weighting of the quality number by the Dilution of precision (DOP) may be used such that for certain unfavorable satellite constellations the respective quality numbers may be automatically negatively influenced. Generally, the relative satellite-receiver geometry plays a major role in determining the precision of estimated positions. When visible navigation satellites are close together in the sky, the geometry is said to be weak and the DOP value is high; when far apart, the geometry is strong and the DOP value is low. Thus, a low DOP value represents a better positional precision due to the wider angular separation between the satellites used to calculate the vehicle's position.

In accordance with an embodiment, in case with respect to a given grid point the quality number for a certain satellite position does not fulfill a first minimum quality criterion, for that grid point any GNSS signals from said satellite position are excluded for the planning of the movable operation. In case for example the vehicle is crossing a given grid point multiple times and it occurs once that a GNSS signals from a certain satellite position does not fulfill the first minimum quality criterion, for the planning of the movable operation GNSS signals originating from that certain satellite position will always be excluded, irrespective if later on the quality of GNSS signals originating from that certain satellite position may improve. This may have the benefit that for all times a rather robust approach is provided based on which a precise navigation of the vehicle is possible using as trajectory at least part of the grid points for which then accuracy of the location determination is available and the accuracy of the location determination is sufficiently high. For example, a large vehicle like for example a caravan may obstruct at a given grid point some GNSS signals from certain satellite positions. Irrespective if the caravan is present or not, the approach is based on the worst-case scenario in which the caravan is present regarding the planning of the movable operation. Thus, it may be ensured that soil cultivation will be possible at high positioning precision, irrespective if the caravan is there or not.

This principle of exclusion of satellite positions holds true for both, the initialization phase in which state of for the same grid points may be recorded multiple times as different points in time, as well as for the actual soil cultivation process, i.e. the movable operation during which a grid point used in the initialization phase or later may also be crossed once or multiple times.

In accordance with an embodiment, the predicting process is comprising an interpolation, the interpolation being performed for at least some of the grid points for which the accuracy of a location determination for points in time future to the respective first point in time is yet unavailable, the interpolation considering grid points e.g. directly adjacent to each other for which the accuracy of a location determination for points in time future to the respective first point in time is available, the interpolation resulting in estimated accuracies of location determination for the grid points for which the interpolation was performed. As mentioned above, the interpolation may also be used to interpolate the values of the parameters characterizing the soil for grid points uncovered by the measurements of the vehicle (for which no parameters characterizing the soil are yet available) based on the values of the parameters acquired for the grid points.

This may have the benefit that it is not necessary to have an initialization phase that covers all grid points of the work area and which consequently it would take significant amount of time for GNSS acquisition. Instead, the interpolation is performed which assumes that for example for neighboring grid points the variation in location determination accuracy will only vary by small amounts. The interpolation may further consider the course of the location determination accuracy between different grid points, such that with a rather high precision an estimation can be made regarding the location determination accuracy for neighboring grid points.

In accordance with an embodiment, during the initialization process the vehicle is randomly moving within the work area, the random movement directing the vehicle to the grid points of the subset of the grid points. For example, the grid points of the subset may result from the random movement of the vehicle. Vice versa it is also possible that the grid points of the subset are randomly selected and that the vehicle is then directed randomly to these grid points. Generally, this may have the benefit that the individual grid points are more or less evenly distributed over the work area such that each for example the above-mentioned interpolation is effectively available for being performed for a large number of grid points. A further benefit may be that due to the random distribution of the grid points when aborting the initialization process it is highly probable that the accuracy of a location determination is available for a more or less equally distributed subset of the grid points. This would be helpful for providing a good coverage of the work area with accuracies of location determination being directly available via the received GNSS data or indirectly available via interpolation for the major part of the work area.

In accordance with an embodiment, the planning of the movable operation comprises the clustering of at least some of the grid points, e.g. based on the criterion that the clustering is performed for at least some of the grid points for which the accuracy of the location determination is available, the clustering resulting in the sets of clustered grid points, wherein for each set of the clustered grid points starting from a respective second point in time moving of the vehicle along said set of clustered grid points guided using a third set of GNSS signals received from the GNSS receiver during said movement is possible with an accuracy of the location determination during the guiding fulfilling a second minimum quality criterion. Preferably, for a given one of the sets each of the grid points have at least one immediately adjacent grid point in that set.

The clustering may have the benefit that a basis is provided on which a scheduling of the moveable operation is possible in an easy manner. Generally, the clustering ensures that starting from a certain time in future the vehicle is able to navigate along grid points of a set of clustered grid points in such a manner, that the quality of navigation is sufficiently high, i.e. that a precise navigation in terms of location determination is guaranteed.

A navigation of a vehicle is understood as a guiding of the vehicle to a desired grid point using the vehicle's position detector to determine the vehicle's real position relative to the desired grid point.

In accordance with an embodiment, the work area is comprising boundaries confining the work area, wherein for grid points lying within a predefined boundary zone bordering the boundaries the second minimum quality criterion is tightened up, for example by a relative value, for example a value in between 10% and 30%. This may have the benefit that an unintentional movement of the vehicle out of the work area is prohibited due to an imprecise location determination at the boundaries of the work area. The predefined boundary zone may be an edge strip with a given width, which borders with a side directly to the boundaries.

In accordance with an embodiment, at least one of the predicting process and the clustering are comprising for a grid point: adjusting the associated accuracy of location determination taking into account that the position determination is additionally performed using a deduced reckoning position estimate obtained from a deduced reckoning navigation device of the vehicle. For example, the taking into account that the position determination is additionally performed using the deduced reckoning position estimate is restricted to grid points located within a maximum predefined distance from a grid point for which the unadjusted associated accuracy of location determination fulfills the second minimum quality criterion.

A "deduced reckoning navigation device" may comprise anyone of a direction component that can receive x-axis and y-axis acceleration information from sensors, e.g., gyroscopes and accelerometers, gravitational sensors. Further, it may comprise compresses, odomemetric sensors etc. Odometric sensors are generally motion sensors which provide motion in formation for usage in odometry, i.e. an information about a change in position over time. Odometry makes for examples usage of the knowledge about the vehicles driving wheel circumference and recorded wheel rotations and steering direction in order to calculating the vehicle's current position by using a previously determined (reference) position. Generally, a deduced reckoning navigation device in the context of the present disclosure is a device that besides GNSS signal information uses any available sensor information for dead reckoning. In navigation, dead reckoning is the process of calculating one's current position by using a previously determined position, or fix, and advancing that position based upon known or estimated speeds over elapsed time and course.

This is based on the insight that even without a high-quality tea GNSS location determination being available, starting from a precisely known location and using additionally that deduced reckoning position estimate it is still possible to supplement the GNSS location determination with additional deduced reckoning position data standing for example from odometry, such that in total the accuracy of location determination is sufficiently high for performing the movable operation.

Since the usage of the deduced reckoning position estimate is restricted to grid points located within a maximum predefined distance from a grid point, it may be ensured that location determination errors occurring when using the deduced reckoning position estimate are not accumulating in a manner that the total accuracy of location determination would be influenced in a negative manner.

In accordance with an embodiment, the planning of the movable operation is comprising scheduling the movable operation for obtaining a movement trajectory of the vehicle for performing the movable operation, the scheduling comprising selecting one or more of the sets of clustered grid points, the movement trajectory comprising the grid points of the sets of clustered grid points. This may have the benefit that either starting from the desired point in time for example set by a user the actual movable operation is performed, or that the scheduling itself is selecting at most suitable starting point in time based on the clustered grid points starting from which the movable operation can be performed in e.g. a rather efficient manner. For example, an efficient manner would be a manner in which in a consecutive way the majority of clusters grid points can be covered by the movement trajectory.

In accordance with an embodiment, execution of the instructions by the processor further causes the vehicle for performing the movement of the vehicle to said selected one or more of the sets of clustered grid points and repeating the steps of the initialization process during the movement for the grid points traveled during the movement and with the first point in time being the actual point in time of movement on the respective grid point. Additionally or alternatively it is possible to acquire parameter values characterizing the soil and use these values to update existing values for the respective grid points, e.g. adapt the parameter values as described above or to assign parameter values in case the respective have not yet the e.g. measured or determined parameter values assigned.

As a consequence, the available data regarding location determination accuracy is more and more completed with real measurements data of GNSS signals for different points in time. For example, the movement of the vehicle may also in walls movement over grid points for which only interpolation accuracy data is available. This interpolation accuracy data can then be completed by real measurement data based on GNSS signals. That repetition of the steps of the initialization process may also involve further interpolation, predicting and taking into account that the deduced reckoning position estimate may be used.

In accordance with an embodiment, the vehicle is further comprising a compass, wherein execution of the instructions by the processor further causes the vehicle for performing the planned movable operation resulting in a movement of the vehicle, wherein in case moving of the vehicle guided using the GNSS signals received from the GNSS receiver during said movement is not possible any more with an accuracy of the location determination during the guiding fulfilling a fourth minimum quality criterion: determining the heading of the vehicle using the compass, determining the compass direction in which the area lies, in which the vehicle was last guided with the accuracy of the location determination during the guiding fulfilling the second minimum quality criterion. This may be considered as for example a backup solution in a case for whatever reason the vehicle gets displaced in an unforeseen manner from the position in which the vehicle was last guided. For example, the vehicle may get offset by being hit by person or an animal or the vehicle may start to slip into a certain direction on a step hill. With the fourth minimum quality criterion having a requirement on quality lower than the second minimum quality criterion, the vehicle may not be able to determine its actual location in the precise manner. Nevertheless, by using the heading of the vehicle using its compass and the compass direction in which the area lies in which the vehicle was last guided with the accuracy of the location determination during the guiding fulfilling the second minimum quality criterion, it is possible to turn the vehicle and move it towards the area using a compass based navigation approach.

Another example, which is not part of the invention, relates to a robotic vehicle for movable operation in a work area, the movable operation comprising a soil cultivation, the vehicle comprising two simultaneously driven drive wheels, the center of mass of the vehicle being arranged stationary on a hill side of the vehicle off-center with respect to the center between the two wheels in the transverse direction of the vehicle, the vehicle comprising a controller comprising a memory, the memory comprising instructions, the vehicle comprising a sensor module in communicative connection with the controller, wherein execution of the instructions by the processor causes the controller to control

- the sensor module for detecting a direction of a gradient of a sloped subarea of the work area,
- the drive wheels for orienting the vehicle such that the hill side of the vehicle faces uphill into the direction of the gradient,
- the vehicle to perform the movable operation with the soil cultivation at least in the sloped subarea following a scheduled movement trajectory covering the subarea, wherein the scheduled movement trajectory within the sloped subarea has a zigzag form comprising a plurality of sub-trajectories with mutually opposite directions of movement for climbing the slope of the subarea.

This example may have the benefit that due to the pointing of the "heavy side" uphill into the direction of the gradient (the side of the vehicle which has the center of mass faces uphill) the load on the two wheels may become more evenly distributed. As result, the total traction of the vehicle is enhanced. Overall, this could make the vehicle move more stable.

Preferably, for each two sub-trajectories running directly adjacent to one another the direction of the movement of the vehicle is respectively opposite with one direction of movement comprising a forward movement of the vehicle and the other direction of the movement comprising a backward movement of the vehicle.

Thus, the movement of the vehicle is mainly forth and back avoiding any turns larger than 20 degrees of the vehicle. As a result, within the subarea the side of the vehicle facing up the hill is always the same, so that the displacement of the mass component described above can be kept almost constant, which in battery-operated vehicles can minimize the energy requirement during vehicle operation. Minor adjustments to the orientation of the vehicle such that that the hill side of the vehicle again faces uphill into the direction of the gradient can be made depending on the detection of the direction of the gradient of the sloped subarea signaled by the sensor module.

Further disclosed is a method for operating a battery operated robotic vehicle for autonomously performing movable operation in a work area, the vehicle comprising a battery powering an engine of the vehicle, the movable operation comprising a soil cultivation, the vehicle comprising two simultaneously driven drive wheels, a mass component, a controller, an actuator and a sensor module in communicative connection with the controller, the wheels being spaced apart from each other in the transverse direction of the vehicle, the mass component being displaceable by the actuator in the transverse direction along a straight line, the sensor module being adapted for determining of a weight load of one of the wheels, for determining in the transverse direction the position of the center of mass of the vehicle from the weight load, and for signaling the position to the controller, the method comprising controlling the actuator for a movement of the mass component along the straight line depending on the signaled position of the center of mass. The method further comprises controlling the vehicle by the controller to perform the movable operation with the soil cultivation at least in a sloped subarea of the work area following a scheduled movement trajectory covering the subarea with a side of the vehicle facing up the sloped subarea being always the same within the subarea, wherein the scheduled movement trajectory within the sloped subarea has a zigzag form comprising a plurality of sub-trajectories with mutually opposite directions of movement for climbing the slope of the subarea, wherein for each two sub-trajectories running directly adjacent to one another the direction of the movement of the vehicle is respectively opposite with one direction of movement comprising a forward movement of the vehicle and the other direction of the movement comprising a backward movement of the vehicle.

Execution of the instructions by the processor causes the controller to control the vehicle to perform the method comprising at least in the sloped subarea of the work area following the scheduled movement trajectory covering the subarea.

Another example, which is not part of the invention, relates to a method for operating a robotic vehicle for movable operation in a work area, the movable operation comprising a soil cultivation, the vehicle comprising two simultaneously driven drive wheels, the center of mass of the vehicle being arranged stationary on a hill side of the vehicle off-center with respect to the center between the two wheels in the transverse direction of the vehicle, the vehicle further comprising a controller and a sensor module in communicative connection with the controller, the method comprising controlling the sensor module for detecting a direction of a gradient of a sloped subarea of the work area, controlling the drive wheels for orienting the vehicle such that the hill side of the vehicle faces uphill into the direction of the gradient, and controlling the vehicle to perform the movable operation with the soil cultivation at least in the sloped subarea following a scheduled movement trajectory covering the subarea, wherein the scheduled movement trajectory within the sloped subarea has a zigzag form comprising a plurality of sub-trajectories with mutually opposite directions of movement for climbing the slope of the subarea.

Generally, controlling the vehicle to follow the zigzag form of the scheduled movement trajectory comprises for each sub-trajectory controlling the vehicle to perform within a first end section of the respective sub-trajectory a first combined climbing operation. The first combined climbing operation combines a first varying climbing operation and a first constant climbing operation. The first varying climbing operation follows a first curved subsection of the respective sub-trajectory. The first constant climbing operation follows a first constant subsection of the respective sub-trajectory and a second endpoint of the first curved subsection coinciding with a first endpoint of the first constant subsection.

Such a varying climbing operation comprises changing an orientation of the vehicle following a curved subsection of the respective sub-trajectory. Starting at a first end point of the respective curved subsection following the curved subsection to a second endpoint of the subsection, a climbing angle continuously increases until a maximum climbing angle is reached at the second end point. The climbing angle is an angle between a tangent touching the curved subsection and a reference tangent touching the curved subsection at the first end point. Such a constant climbing operation comprises maintain a constant orientation of the vehicle following a constant subsection of the respective sub-trajectory. For each two sub-trajectories running directly adjacent to one another the first end sections are located on opposite ends of the respective sub-trajectories.

This method may for example be a computer implemented or it may be realized by an Application-Specific Integrated Circuit (ASIC).

According to embodiments, the method for operating a robotic vehicle for a movable operation in the work area may comprise any of the functional features executed by the aforementioned embodiments of the robotic vehicle.

In another aspect, the invention relates to a computer program product comprising computer executable instructions to perform one or more of the embodiments of the aforementioned method for operating a robotic vehicle for a movable operation in a work area.

The above-described examples and embodiments may be combined freely as long as the combinations are not mutually exclusive. It further has to be noted that in case above it is understood that any mentioned first minimum quality criterion is always the same first minimum quality criterion, any mentioned second minimum quality criterion is always the same second minimum quality criterion.

In the following, embodiments of the invention are described in greater detail in which

Figure 1 is a schematic cross-section through a sloped subarea,

Figure 2 illustrates a schematic trajectory with a zigzag form,

Figure 3 shows details of schematic trajectory of figure 2,

Figure 4 illustrates a schematic trajectory with a zigzag form,

Figure 5 shows details of schematic trajectory of figure 4,

Figure 6 illustrates a schematic trajectory with a zigzag form,

Figure 7 a schematic work area with a sloped subarea,

Figure 8 is a schematic of a robotic vehicle,

Figure 9 is a schematic of a robotic vehicle,

Figure 10 is a schematic of a controller of a robotic vehicle,

Figure 11 shows different modes of performing the movable operation depending on a slope an area,

Figure 12 illustrates an initialization process of a robotic vehicle in a work area,

Figure 13 is a schematic illustrating the fragmentation of sets of clusters a work area,

Figure 14 is a schematic illustrating the fragmentation of sets of clusters a work area,

Figure 15 is a flowchart of a method for operating a robotic vehicle,

Figure 16 shows robotic vehicle performing an initialization process in a work area,

Figure 17 illustrates an exemplary skyplot as seen from the vehicle,

Figure 18 shows different combined skyplots at different points in time for the given grid point,

Figure 19 shows a first set of clustered grid points with respect to a given starting time point,

Figure 20 shows a second set of clustered grid points with respect to another a given starting time point,

Figure 21 is a flowchart of method for operating a robotic vehicle, and

Figure 22 is a flowchart illustrating a clustering process,

Figure 23 is a schematic cross section through a vehicle,

Figure 24 is a schematic cross section through a vehicle,

Figure 25 is a flowchart illustrating a method of operating a robotic vehicle (fig. 25 is not part of the invention),

Figure 26 is a schematic of a robotic vehicle (fig. 26 is not part of the invention).

In the following similar features are denoted by the same reference numerals. Without restriction to generality in the following it is assumed that the robotic vehicle is a lawnmower and that the soil cultivation is the mowing of the lawn of a work area.

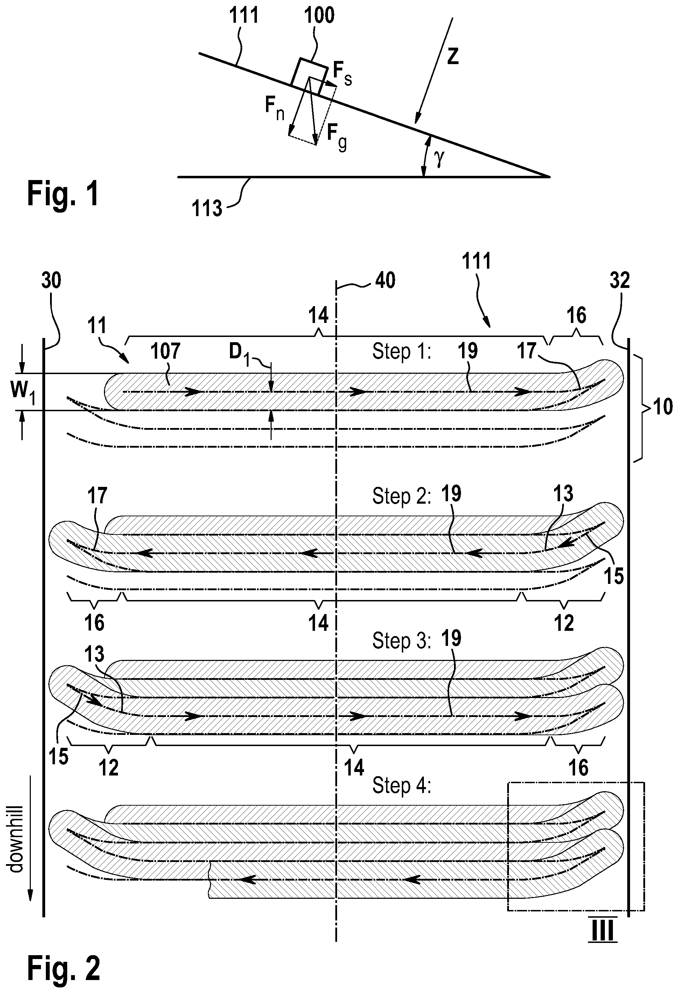

Figure 1 shows a schematic cross-section through a sloped subarea 111. The sloped subarea 111 is inclined relative to a plane 113 of constant height by an angle of slope $\gamma$. Thus, the gravity force $F_g$ acting on the robotic vehicle 100 moving within the sloped area 111 comprises a component $F_n$ directed perpendicularly to the sloped area and a second component $F_s$ directed downhill parallel to the sloped work area 111, i.e. the downhill slope force.

Figure 2 illustrates step-by-step a movement of the robotic vehicle 100 following a scheduled movement trajectory 10 which comprises a zigzag form. The point of view of figure 2 is in the direction Z indicated in figure 1 perpendicular onto the sloped work area 111. The scheduled movement trajectory 10 comprises a plurality of sub-trajectories 11. The exemplary trajectory 10 shown in figure 2 comprises four sub-trajectories. Here, each sub-trajectory 11 extends from one boundary 30 of the sloped work area 111 to another opposite boundary 32. For each two sub-trajectories 11 running directly adjacent to one another the direction of the movement of the robotic vehicle 100 is respectively opposite with one direction of movement comprising a forward movement of the vehicle and the other direction of the movement comprising a backward movement of the robotic vehicle 100. For example, the robotic vehicle 100 moves forward in step1 along a first sub-trajectory 11 and backward in step 2 along a second sub-trajectory 11. The endpoints of sub-trajectories 11 are points of inversion of the direction of movement of the robotic vehicle 100. At the end of each sub-trajectory 11 the direction of movement is inverted, i.e. the robotic vehicle 100 is decelerated to rest and then accelerated from rest in the opposite direction.

Following the scheduled movement trajectory 10, the robotic vehicle 100 using cultivation instruments, like e.g. a mowing blade, cultivates a track of width $W_1$ forming a cultivated region 107 of subarea 111.

In case of figure 2, the robotic vehicle climbs downhill. By inverting the direction of movement of trajectory 10 shown, the same form of the trajectory may be used to climb up the sloped area 111. For climbing up or down the sloped work area 111, also a mirrored version of the trajectory 10 shown in the figure 2 using a middle axis of reflection indicated by dashed line 40 may be used.

In step 1 the robotic vehicle 100 first follows a constant subsection 19 of a first sub-trajectory 11 of trajectory 10 maintaining a constant orientation of the robotic vehicle 100. In the example shown, the constant subsection 19 is a straight line comprised by a middle section 14 of sub-trajectory 11 and extends in a direction perpendicular to the downhill slope force $F_s$, i.e. the direction of slope of subarea 111. Maintaining a constant orientation of the robotic vehicle 100 refers to controlling the direction of movement of the robotic vehicle 100 such that no variations of the direction occur. For example, an influence of the downhill slope force $F_s$ resulting in a momentum acting on the vehicle, which would lead to a change of the direction of movement hill downwards may be countered by countersteering. The constant subsection 19 of figure 2 is a subsection of constant height, i.e. the constant subsection 19 may extend within a plain of constant height relative to a reference level, like e.g. mean sea level. In the exemplary setup shown in figure 2, the robotic vehicle 100 following the constant subsection 19 drives along a straight line from left to right. However, in case the subarea 111 comprises a curved surface, the constant subsection 19 may comprise one or more curves within the plain of constant height. But those curves are only due to the contour shape of the subarea 111, not to changes of the orientation of the vehicle. Changes of orientation refer to steering operations to the left or the right, e.g. by steering one or more wheel of the robotic vehicle 100, e.g. front wheels, and/or by generating different speeds of rotation for different driving wheels.

Reaching end section 16 of the first sub-trajectory 11, the robotic vehicle 100 performs a varying climbing operation following a curved subsection 17 of sub-trajectory 11. In this example, end section 16 is identical with the respective curved subsection 17. The varying climbing operation performed in end section 16 comprises a change, i.e. varying, of orientation of the robotic vehicle 100. At the end of this climbing operation, the orientation of the robotic vehicle 100 has been changed from an orientation parallel to the constant subsection 19 to an orientation which is inclined relative to the constant subsection 19 by a maximum climbing angle $\alpha_{max}$. While performing the varying climbing operation, the robotic vehicle 100 is decelerated to rest. Due to angle $\alpha$ between constant subsection 19 and a tangent touching the curved subsection 17 increasing along the curved subsection, the share of the downhill slope force $F_s$ acting against the direction of movement of the robotic vehicle 100 increases contributing the slow down the same.

After having come to rest, the robotic vehicle 100 restarts in step 2 from rest in the opposite direction, i.e. drives backwards. Due to the maximum climbing angle $\alpha_{max}$ between the direction in which the robotic vehicle 100 starts moving and the direction perpendicular to the slope of the subarea 111, a share of the downhill slope force $F_s$ acts in the direction of restart of movement of the robotic vehicle 100 supporting the restart and reducing the risk of the of the robotic vehicle 100 getting stuck. The maximum climbing angle $\alpha_{max}$ between the orientation of the robotic vehicle 100 at restart and the direction of movement of the constant section 14, i.e. a direction perpendicular to the direction of slope of the sloped subarea 108, may be significantly smaller than 90°. Thus, a toppling over of the robotic vehicle 100 due to the downhill slope force $F_s$ may efficiently be prevented.

When accelerating from rest again at the beginning of step 2, a second climbing operation is performed by the robotic vehicle 100 climbing down the slope area within an end section 12 of the second sub-trajectory 11. The second climbing operation is a combined climbing operation combining a constant climbing operation and a further varying climbing operation. A first part of the second climbing operation, i.e. the constant climbing operation, follows a constant subsection 15 of the second sub-trajectory 11 maintaining a constant orientation of the robotic vehicle 100. In other words, the angle between the direction of motion and the direction parallel to the direction of movement of the middle section 14 is kept constant equal to the maximum climbing angle $\alpha_{max}$. Thus, the downhill slope force $F_s$ may be used for supporting the movement of the robotic vehicle 100 and in particular its initial acceleration from rest until a sufficient distance downwards, i.e. parallel to the slope of the subarea 111, has been covered. Then a second part of the combined climbing operation, i.e. a further varying climbing operation, is performed in end section 12 following a curved subsection 13 of the sub-trajectory 11, until the orientation of the robotic vehicle 100 at the beginning of the middle section 14 of the first sub-trajectory 11, i.e. before all the aforementioned climbing operations, has been restored and the robotic vehicle 100 follows a constant subsection 19 of the second sub-trajectory 11 parallel to the constant subsection 19 of the first sub-trajectory 11. The direction of movement following the constant subsection 19 of the second sub-trajectory 11, i.e. backwards, is inverted relative to the direction of movement of the robotic vehicle 100 following the constant subsection 19 of the first sub-trajectory 11, i.e. forward. When reaching the second end section 16 at the distal end of the second sub-trajectory 11 at step 2, the same varying climbing operation following a curved subsection 17 of the respective sub-trajectory 11 is performed as before at the end of step 1 in the end section 16 of the first sub-trajectory 11, however with an inverted direction of movement of the robotic vehicle 100, i.e. backwards. When performing the varying climbing operation, the orientation of the robotic vehicle 100 is changed until the maximum climbing angle $\alpha_{max}$ is reached.

At the beginning of step 3, the same combined climbing operation is performed in end section 12 of the third sub-trajectory 11 as before at the beginning of step 2 in the first end section 12 of the second sub-trajectory 11. Only the direction of movement is inverted, i.e. the robotic vehicle 100 is moving forward again. The combined climbing operation combines a constant climbing operation following a constant subsection 15 of the third sub-trajectory keeping the maximum climbing angle $\alpha_{max}$ and a varying climbing operation following a curved subsection 13 of the third sub-trajectory 11 until the orientation of the robotic vehicle 100 is parallel to the constant subsection 19 of the second sub-trajectory 11 again. Then the robotic vehicle 100 follows a constant subsection 19 of a middle section 14 of the third sub-trajectory 11 in a forward direction. When a distal end section 16 of the third sub-trajectory 11 is reached, again a varying climbing operation is performed followed by a further combined climbing operation at the beginning of step 3. This scheme may be repeated until the bottom of the sloped subarea 111 is reached. By altering the lengths of the middle sections 14 of the sub-trajectories 11, the shape covered by trajectory 10 may be adjusted to different geometrical forms of the slope subarea 111. Using the aforementioned scheme, the orientation of the robotic vehicle 100 is never changed by 90° or more. The maximum climbing angle $\alpha_{max}$ is rather significantly smaller than 90°, e.g. smaller than 45°, 40°, 35° or even 30°. In particular, no U-turn is performed.

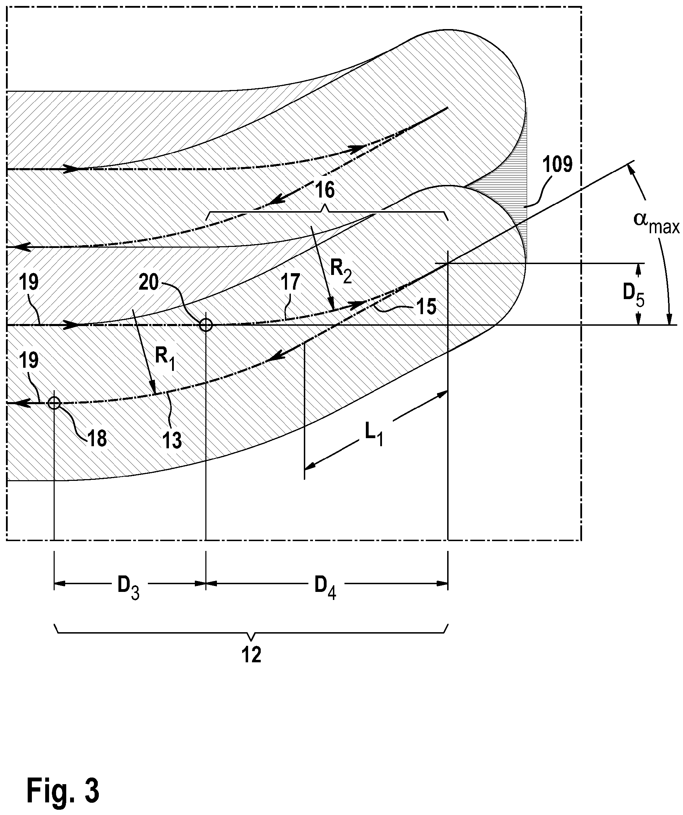

Figure 3 shows a detailed schematic of the climbing operations performed by the robotic vehicle in the end sections 12, 16 of the sub-trajectories 11, when executing the method of figure 2. The varying climbing operation in end section 16 follows the curved subsection 17 with a curvature radius $R_2$. The curvature radius $R_2$ defines for example a minimum curvature radius, i.e. indicating the largest curvature along the curved subsection 17. The curvature radius $R_2$ is for example 3.2 * W, wherein W is a maximum range of soil cultivation of the robotic vehicle 100 perpendicular to the direction of movement of the robotic vehicle 100. In case of a lawn mower, W is e.g. a length of a blade of the lawn mower, which equals the diameter of the lawn section cut by the respective rotating blade. Following the curvature of subsection 17 starting at a starting point 20 of end section 16, an angle between the constant subsection 19 and a tangent touching the curved subsection 17 increases starting from zero until the maximum climbing angle $\alpha_{max}$ is reached at the end of the curved subsection 17, e.g. $\alpha_{max} = 28°$. Due to the varying climbing operation a distance $D_5$ hill upwards is covered, e.g. $D_5 = 0.375 * W$, while in a direction perpendicular to the slope of the subarea 111, a distance $D_4$ is covered, e.g. $D4 = 1.5 * W$.

The combined climbing operation end section 12 comprises the constant climbing operation following a constant subsection 15 as well as a further varying climbing operation following a curved subsection 13. The constant angle of inclination of the constant subsection 15 with respect to a direction perpendicular to the slope of subarea 111, i.e. constant subsection 19, is the maximum climbing angle $\alpha_{max}$, e.g. $\alpha_{max} = 28°$. The constant subsection 15 may e.g. have a length $L_1 = W$. The curved subsection 13 may comprise a curvature radius $R_1$. The curvature radius $R_1$ defines for example a minimum curvature radius, i.e. indicating the largest curvature along the curved subsection 13. The curvature radius $R_1$ may be larger than curvature radius $R_2$, e.g. $R_1 = 3.4 * W$. According to alternative embodiments, the curvature radii $R_1$ and $R_2$ may be equal. The starting point 18 of end section 16 and the end point 20 of end section 20 may be displace in a direction parallel to the constant subsections 19 by the distance $D_3$, e.g. $D_3 = W$. Due to the combined climbing operation a distance of $D_5$ plus the distance between the parallel subsections 19 of the sub-trajectories 11 is covered hill upwards. In case the later distance is $0.5*W$, a total distance of $0.875 * W$ is covered hill upwards. In a direction perpendicular to the slope of the subarea 111, a distance of $D_3$ plus $D_4$, i.e. $2.5 * W$, is covered. The curved subsection 13 may connect the two constant subsections 19 and 15 such that no kinks result and the robotic vehicle may follow a smooth line driving in a forward or backward direction.

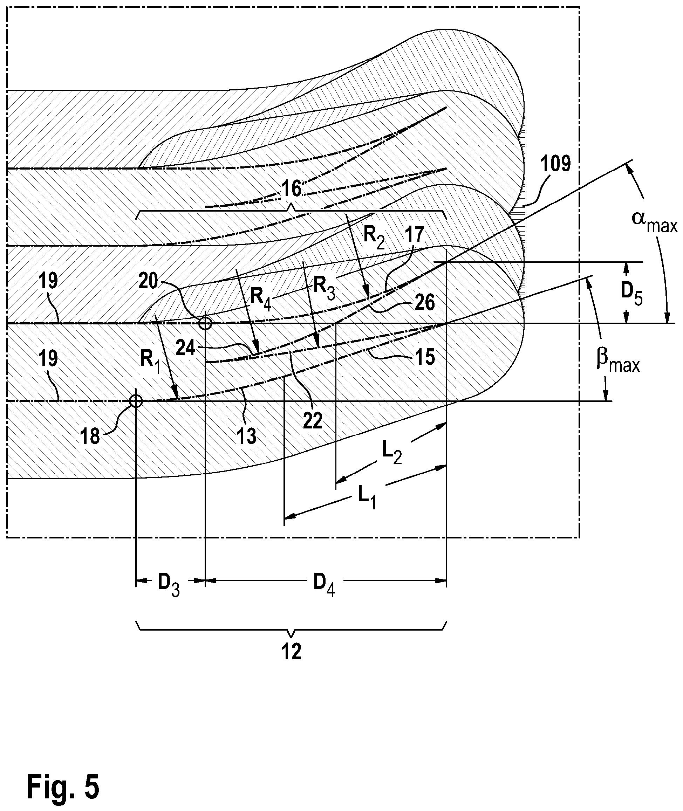

It has to be noted that any mentioned radius $R_i$ of a curved subsection is perpendicular to the respective constant subsection which is geometrically followed by the curved subsection and defined with respect to the last point of the respective constant subsection which is geometrically followed by the curved subsection. The radii depicted in fig. 3 (and also later in fig. 5) are only schematic and do not represent the real length of the radii $R_i$.

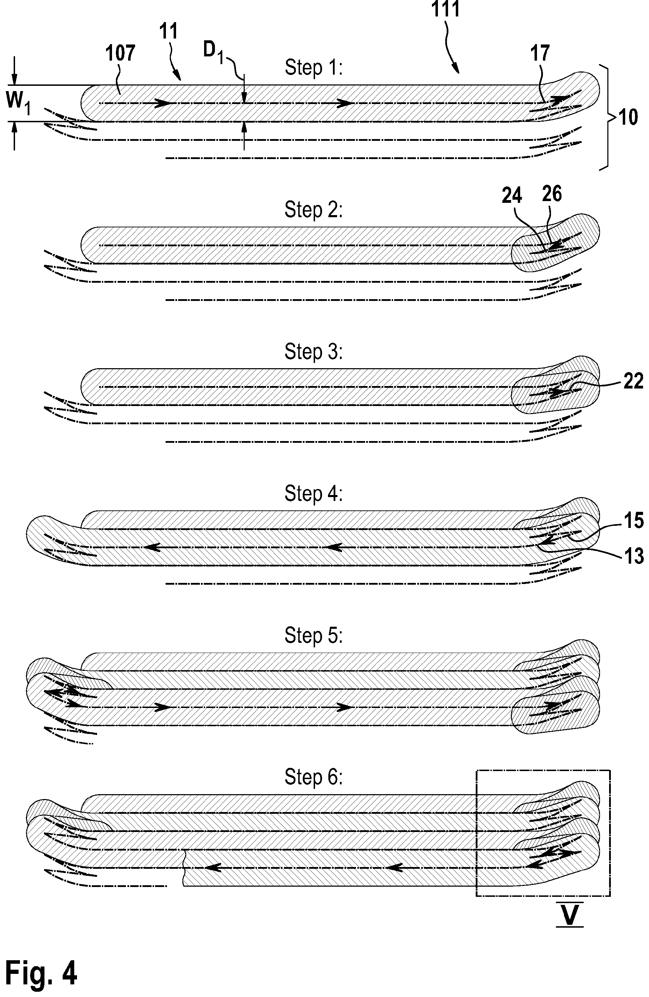

Figure 4 illustrates an alternative method for climbing down sloped subarea 111 of figure 1. The method of figure 4 is largely equivalent to the method of figure 2. Step 1 of figure 4 is equal to step 1 of figure 2, while step 4 is of figure 4 is equal to step 2 of figure 2. The differences between the trajectory 10 of figure 2 and trajectory 10 of figure 4 is illustrated in detail in steps 2 and 3. The trajectory 10 is extended by an additional combined climbing operation as well as an additional varying climbing operation. Thus, the climbing operations performed during a transition between each two sub-trajectories running directly adjacent to one another are in fact doubled. Instead of continuing from the position of rest at the end of step 1 of figure 2 with the combined climbing operation along subsections 15 and 13 of step 2 of figure 2, in step 2 of figure 4 first an additional combined climbing operation along additional constant subsection 26 and additional curved subsection 24 is performed. The robotic vehicle 100 moves e.g. in a backward direction. Then an additional varying climbing operation along additional curved subsection 22 is performed, e.g. in a forward direction. In step 4 of figure 4, from the position of rest at the end of curved subsection 22 a combined climbing operation along subsections 15 and 13 similar to the one of step 2 of figure is performed.

As may be seen in the detailed view provided in figure 3, an uncultivated, i.e. uncut, area 109 may remain between adjacent sub-trajectories 11 due to the geometry of the soil cultivation instruments used by the robotic vehicle 100. In order to reduce the uncultivated area 109 of figure 3, the additional climbing operations shown in steps 2 and 3 of figure 4 may be performed. The Combined climbing operation along subsections 26 and 24 is geometrically equivalent to the combined climbing operation along subsection 13 and 15, while the climbing operation along subsection 22 is geometrically equivalent to climbing operation along subsection 17. In other words, the combination of climbing operations as shown in figure 2 used for a transition between two adjacent sub-trajectories 11 is doubled. Only the dimensions of the climbing operations are as adjusted such that after the climbing operations along subsections 17, 26 and 24, the robotic vehicle 100 arrives at an intermediate level in the middle between the two adjacent sub-trajectories 11. Performing the climbing operations along subsection 22 starting at this intermediate level, the robotic vehicle 100 may reach the boundary of the subarea 111 at an intermediate level between the end points of the two adjacent sub-trajectories 11. Thus, also the uncultivated area 109 between the two adjacent sub-trajectories 11 may at least partially be covered and cultivated.

Steps 5 and 6 of figure 4 correspond to steps 3 and 4 of figure 2. In figure 4, the additional climbing operations for covering the uncultivated area 109 are performed for these sub-trajectories 11 as well, but not shown as additional steps.

Details of the doubled climbing operation are shown in figure 5. As it may be easily seen from figure 5, the uncultivated area 109 is significantly reduced compared to the uncultivated area remaining in figure 3. In case of a lawn mower, the remaining uncultivated area 109 may be reduced from around 13.5% of $A = r^2 * \pi$ in figure 3, wherein A defines the area cultivatable, i.e. covered by the rotating blade, of the resting lawn mower, while r defines the half length of the rotating blade, to around 4% of A in figure 5. The varying climbing operation along subsection 17 in figure 2 may be identical with the climbing operation along subsection 17 in figure 3. Thus,

for example distance $D_4$ = 1.5 * W, $D_5$ = 0.375 * W, and $\alpha_{max}$ = 28°. The dimensions of the other subsections 26, 24, 22, 15 and 13 may be adjusted as following in order to enable a mowing in the intermediate uncultivated area 109: Distances $D_3$ = 0.5 * W, length of subsection 15 $L_1$ = 1.1*W, length of subsection 26 $L_2$ = 0.75*W, (minimum) curvature radius of subsection 24 $R_4$ = 2.5*W, (minimum) curvature radius of subsection 22 $R_3$ = 3.0*W, and (minimum) curvature radius of subsection 13 $R_1$ = 3.0*W.

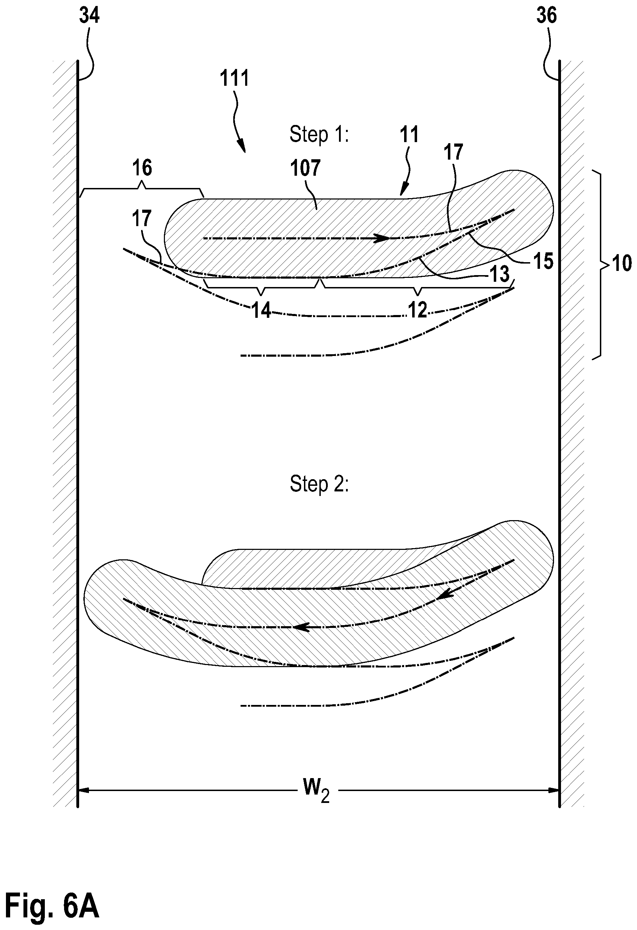

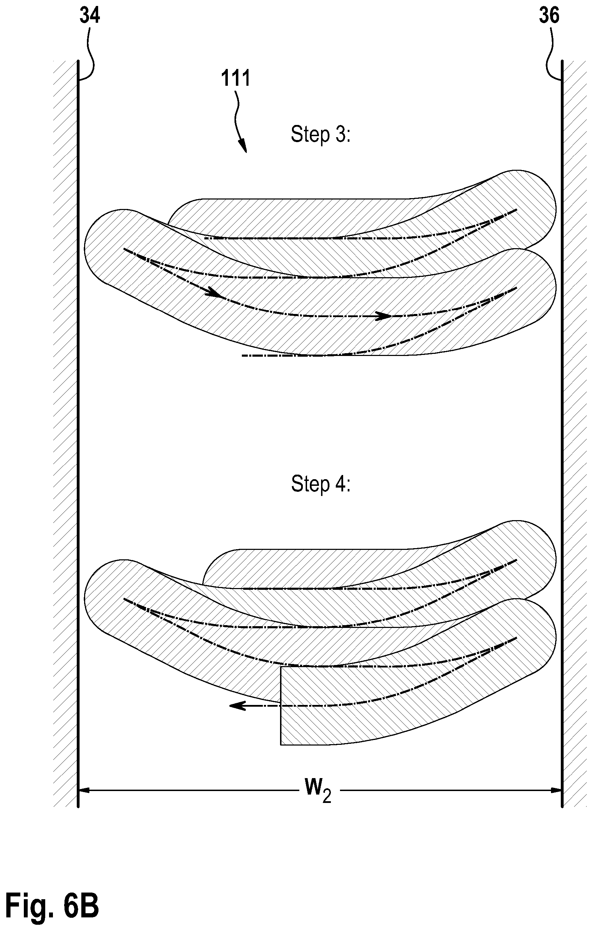

Figures 6A and 6B illustrate a moving operation performed by the robotic vehicle 100 in order to climb down a sloped subarea 111. In the example shown in figure 6A and 6B, the sloped subarea 111 comprises only a narrow width $W_2$ between two obstacles 34, 36. Thus, in order to reduce the width of the sub-trajectories 11, the width of the middle section 14 is reduced in order to fit the trajectory 10 between the two obstacles 34 and 36. Thus, even narrow slopes may be climbed up or down using the form described above. The minimization of the middle section may be going as far as eliminating the middle section such that the whole trajectory may only comprise the climbing operations along subsections 13, 15, and 17. The trajectory as shown in figures 6A and 6B may particularly be used for climbing sloped passages without performing any soil cultivation, but rather in order to cross from one subarea to another.

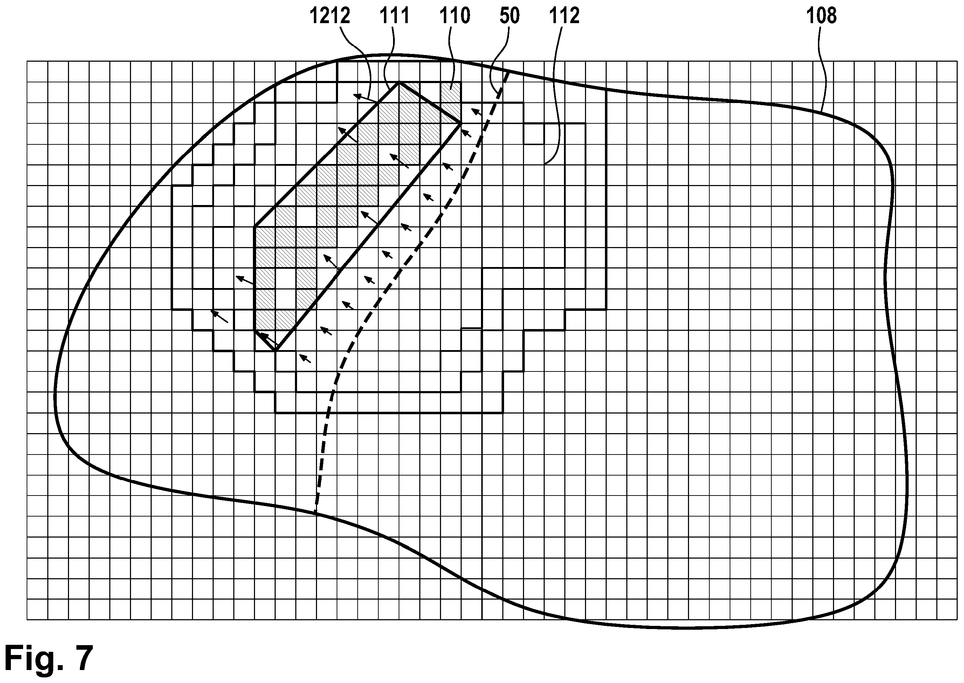

Figure 7 illustrates a clustering of a work area 108 comprising a slope. The direction of slope 1212 is indicated by arrows. The dashed line 50 indicates a contour line comprising points of equal height. According to embodiments a grid comprising a plurality of grid points 112 may be used to discretize the work area 108. As a result, the work area 108 is divided up into set of individual tiles 110. Each grid point 112 is assigned with one or more parameters characterizing part of the work area 108 represented by said grid point. Grid points 112 with assigned with parameters, which satisfy one or more common criteria, e.g. lie within a common parameter range, may be combined to a set of grid points forming a subarea 111 of the work area 108. Such a subarea 1300 may comprise a common averaged slope as shown in figure 1. For climbing such a sloped subarea 111, the trajectory with a zigzag form as described in figures 2 and 4 above may be used.

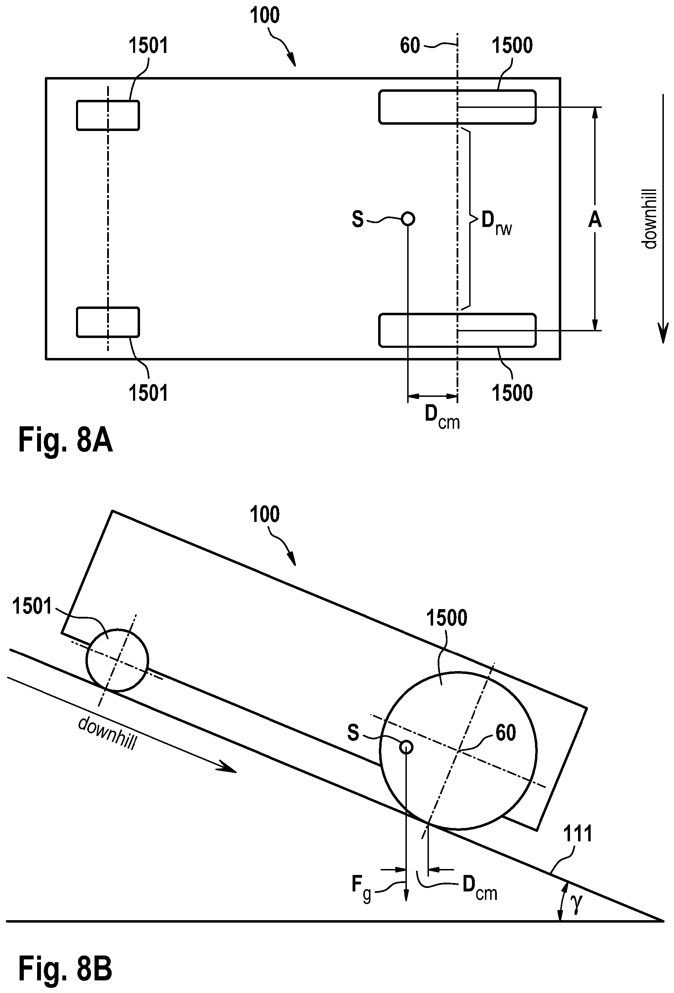

Figure 8A illustrates a schematic of a robotic vehicle 100 indicating a position S of a center of mass of a robotic vehicle 100. The robotic vehicle 100 may comprise a center of mass located at a distance from a common rotational axis 60 of the rear driving wheels 1500 of the robotic vehicle 100 which equals $D_{cm}$= c * $D_{rw}$ with $D_{rw}$ being a distance between the two rear driving wheels. Parameter c may be selected to be smaller than 0.25, preferably 0.1. For example, d = 0.05. When driving perpendicular to the slope of the subarea as indicated in figure 8A, the momentum caused by the downhill slope force acting on the center of mass S may be reduced and less energy be required to counteract the remaining reduced momentum. As shown in figure 8B, by locating the center of mass S near the rear driving wheels, i.e. rotational axis 60, the risk of toppling over of the robotic vehicle 100 increases, in case the robotic vehicle 100 moves parallel to the slope of subarea 111. The subarea 111 is inclined by an angle of slope γ. However, using the trajectories described above, the robotic vehicle 100 moves parallel to the slope of subarea 111. As may be seen from center of mass S may be located beneath a middle main of the robotic vehicle, in particular below the rotational axis 60. Below the rotational axis 60 means that on a plain surface of subarea 111 the distance of the center of mass S to the surface is smaller than the distance between the rotational axis 60 and the respective surface.

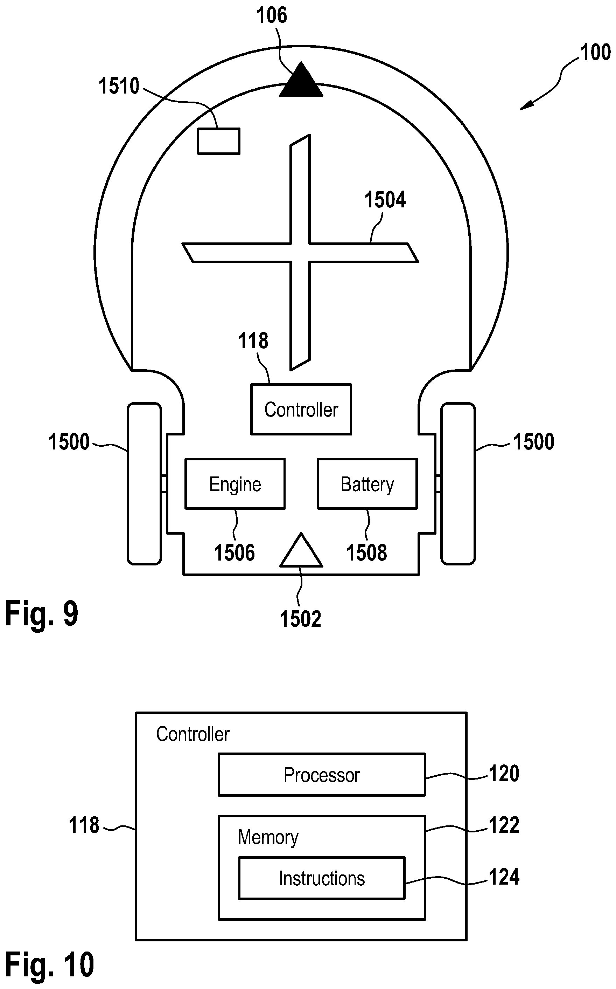

Figure 9 illustrates a schematic of a robotic vehicle 100 in form of a lawn mower which comprises a GNSS receiver 106 and a further sensor 1502 that may be used as a deduced reckoning navigation device in order to support the determination of the location of the lawnmower 100. For example, the sensor 1502 is a camera or a radar sensor which is able to acquire precisely a movement and/or location of the mower 100. The rotation of the wheels 1500 may also be used for obtaining a deduced reckoning position estimate. The lawnmower 100 further comprises a rotating blade 1504 for cutting grass and the controller 118. An engine 1506 is powered by a battery 1508, wherein the engine 1506 is coupled to the wheels 1504 moving the mower from the one grid points to the next grid point. The engine 1506 is an electric motor, e.g. a brushless DC electric motor. In operation, the rotational speed may be controlled using a closed loop proportional-integral-derivative (PID) controller. The battery 1508 may be recharged using a base which is somewhere located either within the area 108 or on the outside border of the area 108.

Figure 10 illustrates a schematic of a controller 118 of the robotic vehicle 100 shown in figure 9. The controller 118 comprises a processor 120 and a memory 122. That memory stores instructions 124, wherein execution of the instructions by the processor causes the vehicle 100 to climb to perform a method comprising at least in a sloped subarea 111 of the work area 108 following a scheduled movement trajectory 10 covering the subarea 111 in order to climb the respective sloped subarea 111. The scheduled movement trajectory 10 within the sloped subarea 111 has a zigzag form comprising a plurality of sub-trajectories 11 as described above with mutually opposite directions of movement for climbing the slope of the subarea 111. Each two sub-trajectories 11 running directly adjacent to one another the direction of the movement of the vehicle 100 is respectively opposite with one direction of movement comprising a forward movement of the vehicle 100 and the other direction of the movement comprising a backward movement of the vehicle 100.

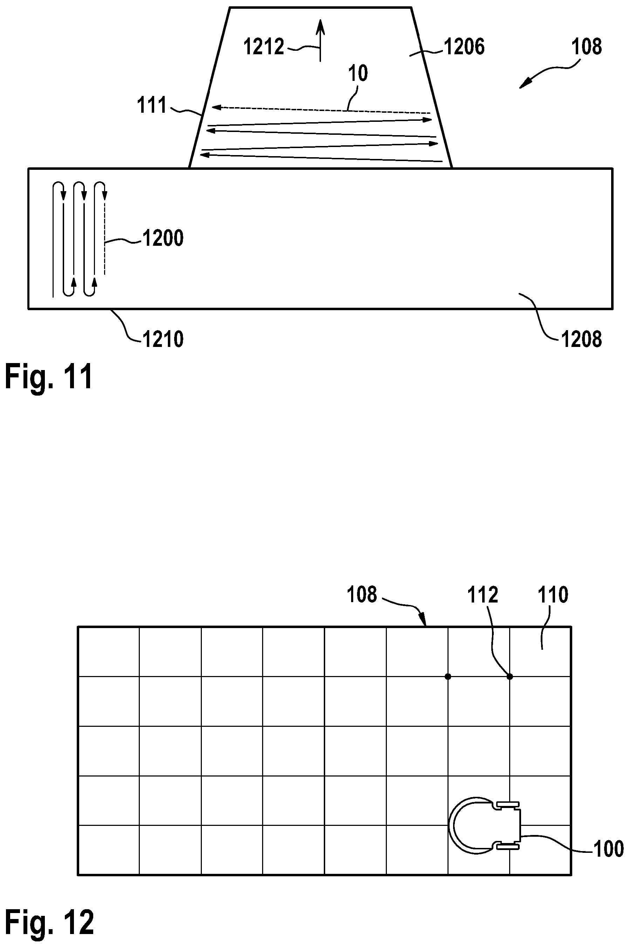

Figure 11 shows different modes of performing the movable operation depending on a slope an area. In figure 11, the work area 108 comprises two subareas 1208 and 111, where the subarea 1208 has an average slope inclination of 10% and the subarea 111 has an average slope inclination of >25%. The movement trajectories 1200 and 10 of the mowing robot are each adapted to a subarea. In the subarea 208, the movement trajectory 1200 is shaped in such a way that the mowing robot travels in parallel paths through the subarea 1208 and performs a 180° turn, i.e. a U-turn, with each reaching of the subarea limit 1210. In figure 11, for example, the paths extend in the direction perpendicular to the longitudinal extension of subarea 1208. However, this can also be done parallel to the longitudinal extension of subarea 1208.

With regard to the subarea 111, which thus has a clustered set of grid points for which the average slope inclination is greater than 25%, the movement trajectory 10 is changed compared to the movement trajectory 10 in such a way that no 180° turn of the mowing robot takes place when the subarea boundary 111 is reached, but the mowing robot merely reverses its direction of movement and performs a minimal rotational movement in the area of the subarea boundary 111, for example by 15° to 30°. This minimal rotary movement is dimensioned in such a way that, with regard to the opposite movement of the mowing robot, the current mowing area overlaps with the mowing area of the previous direction of movement. The trajectory 10 runs essentially perpendicular to the average gradient direction 1212, i.e. the slope, of the subarea 111.

Figure 12 illustrates a lawnmower 100 located within a work area 108 to be processed. The work area 108 is represented by a set of discretized coordinate grid points 112. As a result, the work area 108 is divided up into set of individual tiles 110. An execution of the instructions by the processor may further cause the vehicle for planning a movable operation, the planning comprising clustering of at least some of the grid points, wherein the clustering results in sets comprising some of the grid points. For a given one of the sets, each of the grid points have at least one immediately adjacent grid point in that set, and for all grid points in the set a value of a parameter characterizing the soil represented by said grid points satisfies a soil criterion for performing the movable operation. Execution of the instructions by the processor further causes the vehicle for performing the movable operation based on the sets of grid points.

For example, the vehicle 100 is an autonomous mowing robot and the work area 108 is a lawn to be mowed. The soil thus has grass blades that have to be mown to a certain length by the lawn mower 100. In order to avoid permanently arbitrarily mowing the lawn, even if this were not necessary at all, clustering is carried out by means of the instructions 124. Clustering results in sets of grid points, where the grid points of a set are immediately adjacent to each other and also have one thing in common, for example a minimum grass length. Another possibility could be that the clustered grid points have one thing in common with regard to the traction with which the mowing robot can move on the lawn. Another common feature could be that the clustered grid points are all located in an area with a similar slope inclination. The result latter variant of clustering may for example result in a clustering a shown in figure 11. In figure 11, the work area 108 is clustered into the two subareas 1208 and 111, where the subarea 1208 has an average slope inclination of 10% and the subarea 111 has an average slope inclination of >25%.

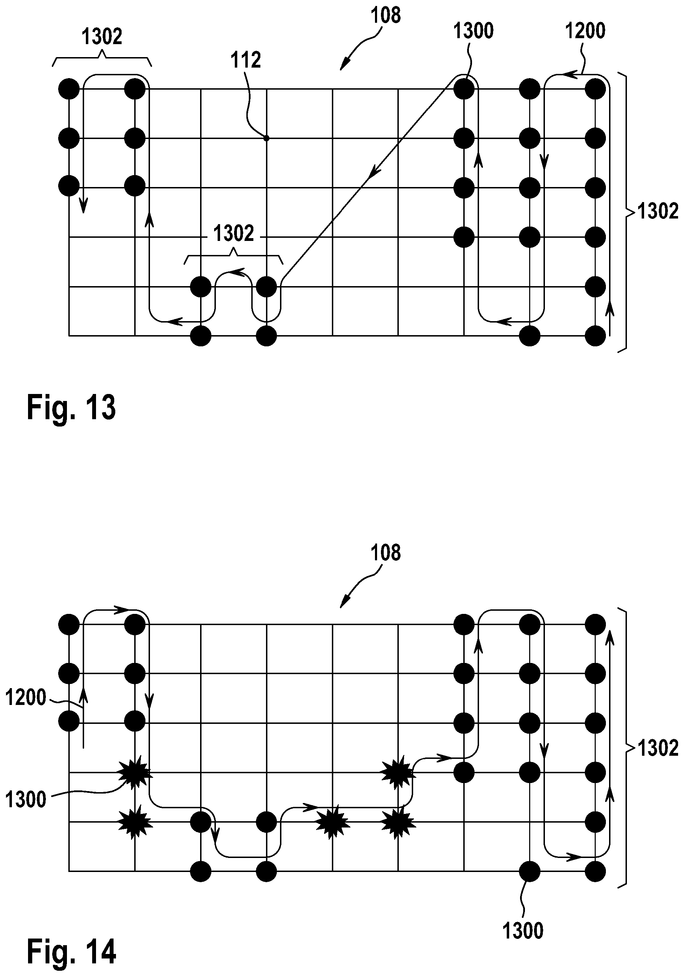

Figure 13 exemplarily shows the result of a clustering. With regard to lawn 108, 3 sets of cluster grid points 300 resulted from the clustering, namely sets 1302. As can be seen in figure 13, these three sets are spatially separated from each other, i.e. cannot be traversed without a gap. This would mean, for example, that after the start of the mowing operation with regard to the right cluster 1302, the mowing robot would have to cover a distance to the middle cluster 1302 without being able or allowed to mow in this respect. The same applies to the distance the mowing robot would have to travel between the middle cluster and the left cluster. A corresponding trajectory 1200 is shown in figure 13, starting with cluster point 1300 at the bottom right.

In order to increase the efficiency of any mowing operation, it is proposed to analyze the degree of fragmentation with respect to the areas covered by the trajectory 1200 (given by the sets 1302 of grid points 1300). If the fragmentation is too high, the criteria for clustering can be progressively relaxed until a fragmentation results that is desired. If, for example, the criterion for clustering in figure 13 was that the parameter value "grass height" was at least 6 cm, this parameter value could now be reduced to a grass height of 5 cm. If, for example, the mowing robot cuts the lawn to a length of 5 cm when driving on the trajectory, the trajectory could also include areas where it is pointless to cut, since the length of the lawn is already 5 cm. However, all intermediate areas of grass lengths >5 cm are covered.

The result of loosening the parameter value "grass height" to 5 cm is shown in figure 14. The clustered grid points 1300 marked with a star are now additionally contained in the set of grid points of the cluster 1302, so that now a trajectory 1200 can be selected, which starts at the top left and covers all cluster points continuously to the top right.

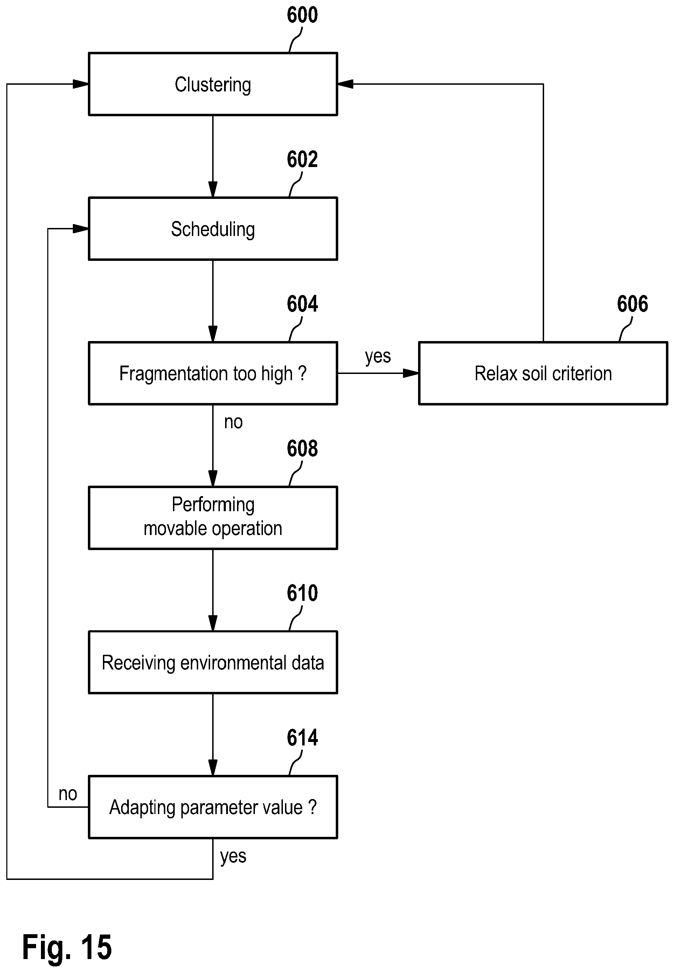

Figure 15 is a flowchart illustrating a method of operating a robotic vehicle for movable operation in a work area. The method starts with step 600 and the clustering of at least some of the grid points of the work area. Generally, for a set of clustered grid points a value of a parameter characterizing the soil represented by said grid points satisfies a soil criterion for performing the movable operation. For example, the parameter characterizing the soil may be a slip of the vehicle's wheels to be used for the movement of the vehicle on the work area for performing the movable operation. In this case, the soil criterion could be a selected range of slips, e.g. from 0-10%. This means, that all grid points for which the slip is in between 0 and 10% will be clustered into one set of grid points. It has to be noted, that the following discussion can be analogously adapted to other parameters like growth rate of plants, slope of parts of the work area etc.

This is followed by a scheduling process in step 602 which selects sets among the sets of clustered grid points obtained from step 600. For the selected sets, a movement trajectory for the vehicle is determined. This movement trajectory covers all the selected sets of clustered grid points.

In step 604 it is checked whether the degree of fragmentation of the work area with respect to subareas of the area covered by the trajectory is above a predefined fragmentation threshold. For example, in case the subareas of the area covered by the trajectory are not seamlessly (with regard to grid points) concatenated by the trajectory, a certain fragmentation result. In case the fragmentation is above the predefined fragmentation threshold, the method continues with step 606 and the relaxation of the soil criterion within specified limits. In the above example the selected range of slips may be relaxed, e.g. to 0-15%. Then the method continues as described above with step 600.

In case the fragmentation is below the predefined fragmentation threshold, the method continues with step 608 and the performance of the movable operation. During the performance of the movable operation and/or independent of the movable operation, the vehicle receives in step 610 environmental data. The environmental data describes for example a predicted rainfall or an actual rainfall with regard to the work area. The resulting wet surface of the work are may directly influence the slip of the vehicle.

The method may either continue with step 614 with a check, if an adaptation of the parameter values "slip" available for the grid points is to be updated regarding the new environmental data or not. An adaptation of the parameter values for the grid points may also affect the clustering, such that the method may continue with step 600. This could go so far that even the current movement process of the vehicle is aborted, and the trajectory in step 602 results in a changed manner after a new calculation.

It should be noted that the environmental data in step 610 can also contain measurement data, for example regarding the current growth height of the plants to be processed. If, for example, assumptions were made about the growth rate of the plants to be cultivated after an initial recording of parameters, for example during an initialization phase of the vehicle, these assumptions may not have been completely accurate. Since Clustering 600 always focuses on future processing of the work area, i.e. requires certain predictions of plant growth, the measurement data obtained in step 610 could be used to optimize the model used to predict the growth rate. This optimization then takes place in step 614.

If no adjustment of the parameter values or even an optimization of the model is necessary in step 614, the procedure continues in step 602, where the scheduling is performed for future times. If it is necessary to adjust the parameter values, the procedure continues with a new clustering in step 600.

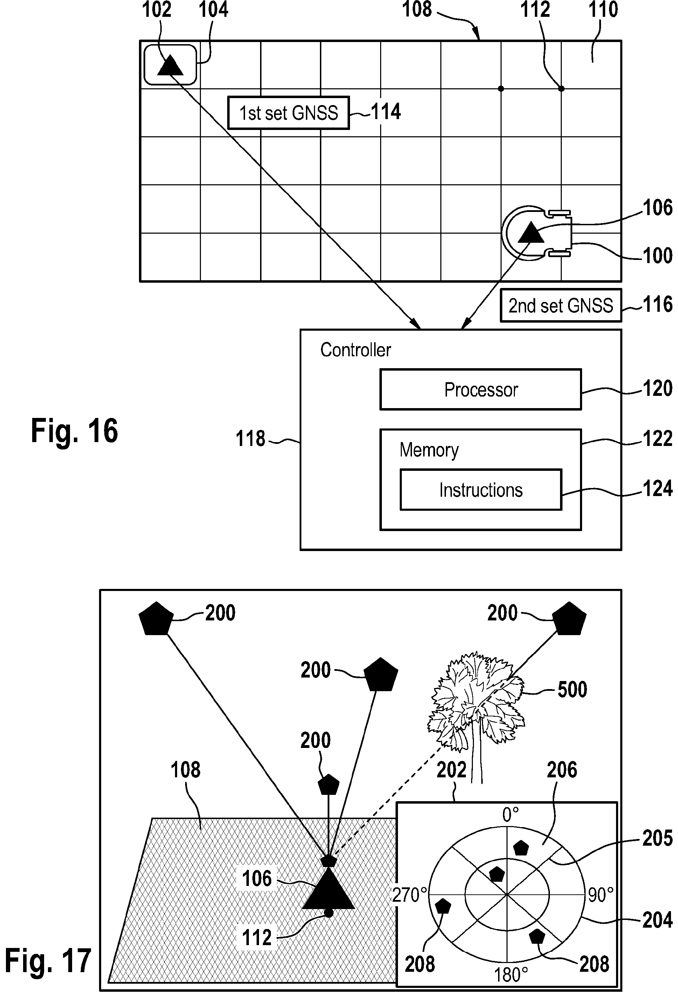

Figure 16 is based on figure 12 and additionally shows that the vehicle 100 is comprising a GNSS receiver 106. Additionally to the features described above, the initialization process to be carried out based on the instructions 124 comprises receiving for given grid point at a certain time point at first set of GNSS signals from the vehicle base 104 which itself comprises a respective GNSS receiver 102. The base 104 is fixed and not movable, whereas the vehicle 100 can move over the lawn 108 to different grid points.

At each grid point and respective point in time the initialization process comprises receiving a first set of GNSS signals 114 from the GNSS receiver 102 and receiving a second set of GNSS signals 116 from the GNSS receiver 106. The first set of GNSS signals and the second set of GNSS signals were acquired at the same point in time by the respective GNSS receivers. The controller uses these two sets of GNSS signals using its instructions 124 to determine an accuracy of location determination based on a comparison of the signal qualities of the first and second set of GNSS signals 114 and 116, respectively. It will be understood that any further algorithms and computational approaches that will be discussed below are also performed by the controller using the instructions 124.

As illustrated in figure 17, at a given grid point 112 the receiver 106 receives the GNSS signals 116 and 114 from different satellites 200 located at various satellite positions in the sky above the vehicle and the base. For some of the satellites 200 there may exist a direct line of sight between the GNSS receiver 106 and the respective satellite, whereas some GNSS signals may be blocked by obstacles, like for example the tree 500 as illustrated in figure 17. As a consequence, the signal qualities of the second set of GNSS signals 116 may variety from satellites to satellite.

The location of the satellite positions in the sky above the vehicle and the base may be represented using a skyplot 202, as illustrated in the inset of figure 17. The skyplot 202 is represented by a coordinate grid 204 and 205 forming individual zones 206. The position of the symbols 208 inside the outer circle 204 the skyplot indicate the satellites 200 at two angles azimuth and elevation. The azimuth is drawn as central angle and the elevation is provided as circle radius. Different elevations correspond to individual grid circles of respectively different diameters. The individual azimuth angles are represented as the lines 205 originating from the center of the skyplot towards the outer circle.

In the following it is assumed that the base has a full view of all satellites in the sky above a certain minimum elevation angle. Further it is assumed, that either the first set of GNSS signals 114 is uncorrected by the controller 118 when comparing the signal qualities of the first set of GNSS signals and the second set of GNSS signals. Uncorrected means here that the skyplots of the base and the mower are not adapted with respect to each other due to a different perspective the respective GNSS receivers have on the same satellite constellations. This is because typically the mower 100 and the base 104 are located at rather short distances relative to each other in such a manner that the position of satellites within the respective skyplots only differ from each other within an irrelevant amount. The only requirement is that GNSS signals from different satellites as seen from the base and the mower can be associated with each other for performing the comparison of the signal qualities. However, in case the base 104 and the mower 100 are located at larger distances away from each other, the respective positions of the satellites 208 in the skyplots may be adjusted taking into account the different locations of the base and the mower.

With respect to the GNSS signals from a given satellite, these signals are compared with each other resulting in a quality number per satellite position. For example, the signal-to-noise ratios SN of the GNSS signals of a GNSS satellite at the base (SN1) and the mower (SN2) are used for that purpose. The quality number Q may then be given by the quotient Q=SN2/SN1. In case the quotient Q is close to 1, this corresponds to a good signal quality and in case the quotient Q is close to 0, this corresponds to a bad signal quality.

In a first step, for the given grid point any GNSS signals from satellite positions will be ignored for which the quality number Q does not fulfill a first quality criterion. For example, the first quality criterion may be that the signal quality needs to be higher than 0.8. In the below example the satellite located in the zone number 7 is excluded from any further accuracy calculations of the vehicle location because its quality number is below the quality criterion.

| Zone 206 | Quality Number Q |
|----------|------------------|
| 3 | 0.95 |
| 7 | 0.3 |
| 9 | 0.85 |
| 13 | 0.9 |
| ... | ... |

From all remaining satellite positions and the corresponding GNSS signals a practical or hypothetical accuracy of a location determination is calculated. This results in the following assignment of time point t of GNSS data acquisition, grid point GP and accuracy A:

| t | GP | A |
|---|----|----|
| 27.04.2017, 08:43:12 | (12;56) | 5cm |

(continued)

| t | GP | A |
|---|----|----|
| 28.04.2017, 13:37:19 | (12;56) | 8cm |
| 27.04.2017, 08:44:46 | (12;59) | 5cm |
| ... | ... | ... |

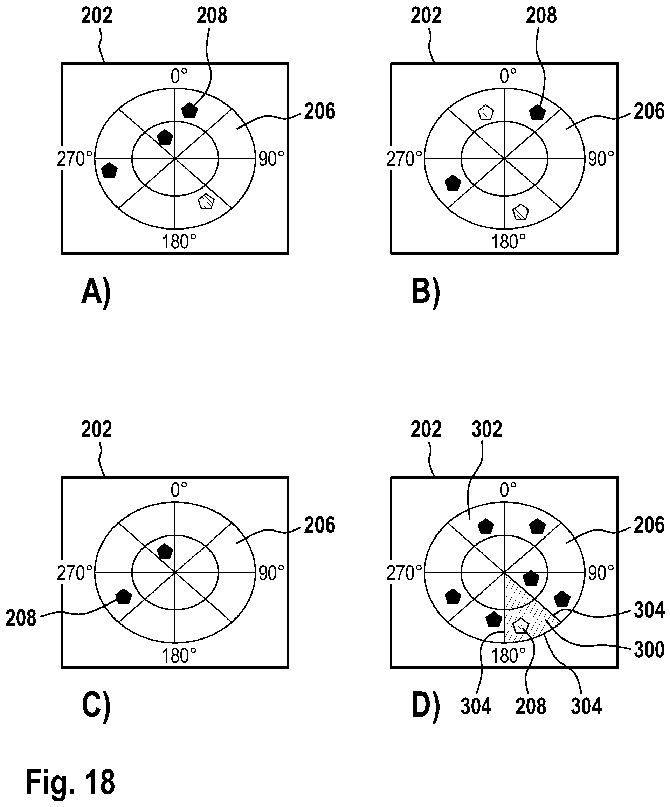

The content of the skyplot is illustrated in figure 18 for different points in time for a given grid point. The skyplots in figure 18 are skyplots, which already contain the combined information resulting from the comparison of the signal qualities of the first and second set of GNSS signals, i.e. they are based on the quality number Q. The reason for having the different skyplots in figure 18 is, that for example during the initialization phase the mower moved several times over the same given grid point, wherein each time a respective skyplot was recorded. This corresponds to for example the different time points as shown in the table above, 27.04.2017, 08:43:12 and 27.04.2017, 08:44:46. Another reason may be that during the actual mowing process the mower has also recorded the actually received second set of GNSS signals at the given grid point and is therefore able to generate additional skyplots from these signals.

In figure 18A, four satellite positions are illustrated, wherein one lower right zone of the skyplot contains a representation of satellite position 208 in a shaded manner. In the table above, this corresponds e.g. to the satellite in zone number 7 which due to its low-quality number was excluded from any further accuracy calculations. As a consequence, for all times in future that respective zone number 7 will be ignored irrespective if later on the quality number may improve or not.

It has to be noted that one may define scenarios in which that exclusion of such a zone is reversed. One example may be that during later travels of the mower over the grid point the quality number for that zone fulfills n successive times the first quality criterion. The scenario may then be that in case n>m, m being a predefined number, the exclusion of the zone is reversed. In this case, the original measurement regarding the signal quality of that respective GNSS signal which led to the exclusion of the zone may be disregarded, while optionally any previous signal qualities that were determined for the zone may be considered for a respective recalculation of the accuracy of the location determination for previous points in time.

Figure 18B shows the skyplot 202 of the same grid points at second point in time. Compared to the skyplot of figure 18A, the skyplot is representing a further satellite position that also has quality number that does not fulfill the first quality criterion (shaded position on the top left). Consequently, this zone will also be excluded from any future accuracy determinations.

From figure 18A it becomes clear, that regarding the given point in time three satellites can be used for determining and the accuracy of determination or calculation of the location of the mower at the given grid point. It has to be noted here that it is clear for the skilled person that in practice a position determination using only three satellites is not possible. Discussion is only for illustrative purposes and the skilled person will be able to extend the discussed principles to a number of satellites that is sufficient for performing a precise location determination.

Since in the figure 18B only two satellites are available for the respective determination of an accuracy of location determination, this means that the accuracy for the time point at which the data for figure 18B was acquired is lower than the accuracy for the time point at which the data or figure 18A was acquired. Comparing figures 18A and 18B also illustrates that it is possible that the satellite positions may vary within the zones 206 slightly. The size of the zones may be adapted according to the needs of accuracy and the number of time points for which GNSS signal acquisition is available or desired.

In figure 18C, only the signals from two satellites are available, all having signal qualities that are fulfilling the first quality criterion.

Figure 18D shows a different approach. Here, the skyplot is divided into a blank area 302 and a shaded area 300. The shaded area 300 comprises one satellite position 208 for which the signal quality does not fulfill the first quality criterion. This shaded area 300 is flanked by a set of further satellite positions 208 for which the signal quality does fulfill the first quality criterion. In case a sufficient number of satellites is available which are arranged in a favorable constellation around a satellite position for which signal quality does not fulfill the first quality criterion, boundaries 304 may be calculated that delimit the blank area 302 as an "area of good reception" from the shadowed area 300. Instead of excluding a specific zone from any further accuracy calculations of the vehicle location because its quality number is below the quality criterion, the approach in figure 18D permits the possibility to exclude extended specific areas 300 from such calculations (or vice versa restrict the calculations to the specific area 302).

After having a determined for different time points and grid points the respectively achievable accuracy of the location determination of the mower, it is now the goal to determine for future points in time when to start a mowing process. Since satellite constellations repeat periodically within satellite repeat cycles and since satellite constellations or satellite positions are predictable for future points in time using GNSS Ephemerides or Almanacs, it is possible to perform a predicting process for at least some of the grid points and for forecasting the accuracy of the location determination for points in time in future.

However, this only holds true for grid points for which already GNSS signals where acquired in the past. For grid points that are not yet covered by the mower e.g. during the initialization phase, an interpolation maybe performed. The interpolation is starting from grid points for which the accuracy of a location determination is already available, either from direct measurements or from the above-mentioned predictions.

As a result, for different points in time and grid points a dataset is obtained which comprises a mix of accuracy of location determinations, determined either from the direct measurements, predictions or interpolations.

From such a dataset, a clustering of grid points can be performed. For example, the clustering clusters all grid points together in a suitable manner such that within the next 24 hours, 48 hours or any arbitrary time span the mower is able to process the lawn by means of mowing operation and a respective movement trajectory that covers these clustered grid points. The clustering may select a suitable starting time point for the mowing operation.

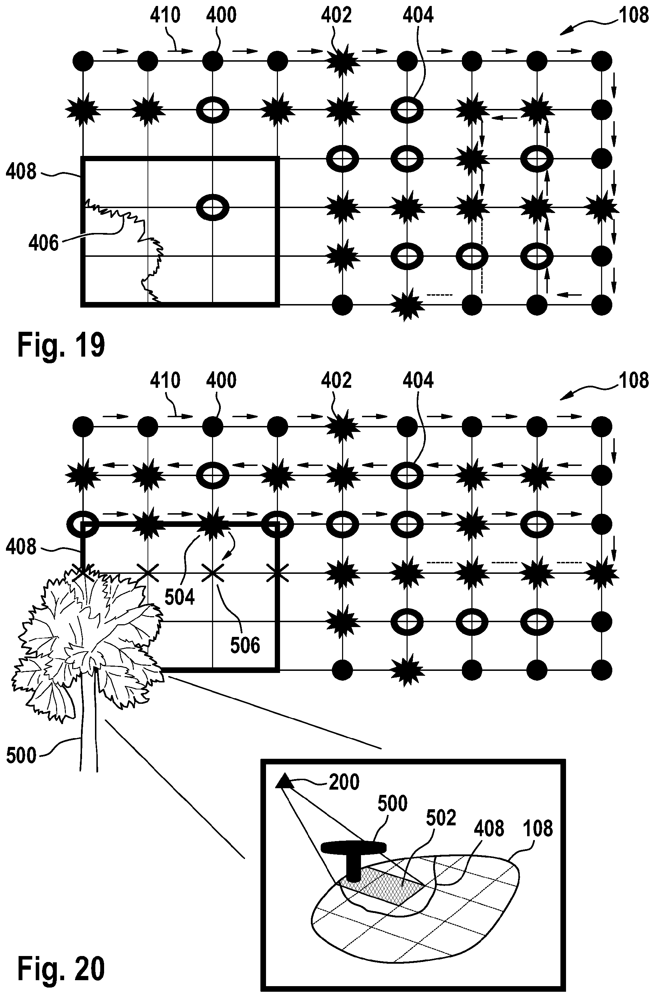

Figure 19 shows a first set of clustered grid points with respect to a given starting time point. The clustering is assumed to include as criterion one of the above-described parameters characterizing the soil. Additionally, the clustering is based on the accuracy of the location determination, determined as described above.

Within the grid 108 the individual grid points are either marked with filled circles, empty circles, or stars. Some of the grid points miss any markings. This is based on the assumption that when starting the mowing operation at a given time point and moving the mower along the trajectory 410, location determination is possible with sufficient high accuracy (accuracy of the location determination during the guiding fulfilling a second minimum quality criterion). The filled circles 400 represent grid points for which the accuracy of the possible location determination is available from satellite repeat cycle based prediction processes. The empty circles 404 represent grid points for which the accuracy of the possible location determination is available from broadcast Ephemerides calculations. The stars 402 represent grid points for which the accuracy of the possible location determination was determined by means of interpolation.

Further shown in figure 19 is an area of 408 which contains only one marked grid point. The reason is understandable from figure 20 which shows the area 108 is partially shadowed by an obstacle 500, a tree. In figure 19 the presence of the tree is illustrated by the contour line 406. The reason for the shadowing it is understandable from figure 20. Here, a satellite 200 is illustrated, wherein the obstacle 500 shadows the signals sent by the satellite 200 within shadow area of 502 of the work area 108. The finer the discretization of the work area with coordinate grid points, and the more data on achievable location accuracy is available in a clustering, the more precise will be the exact shape of the shadow area of 502. Since in figure 19 the grid is rough and the amount of data on achievable location accuracy within the are 408 is low, the trajectory 410 must completely omit area 408 since accurate GNSS based navigation is not possible within that area for the given time point of starting the mowing operation.

Regarding figure 20 it is assumed, that still within area of 408 a precise location determination of the mower is not possible. However, since for the grid points of the border line of area 408 additional data on achievable location accuracy is available. The respective trajectory 410 may be modified compared to figure 19 to also cover this area 408.

It has to be noted here that it even may be possible that the mower is moving into the area of 408 even though a GNSS based navigation it may not be a reliable enough anymore. For the grid points indicated by crosses in figure 20, a predicting process may be used that additionally takes into account that the position determination is additionally performed using a deduced reckoning position estimate. For example, when the mower is located at grid point 504, odometry may be used to move the mower to grid point 506. Just considering the second minimum quality criterion, in the predicting process the grid point 506 would have been excluded because the accuracy of the location determination does not fulfill a second minimum quality criterion. However, since a lower quality in location determination using GNSS could be improved using odometry, it is additionally considered if the accuracy of the location determination does fulfill the second minimum quality criterion. If this is the case, the associated accuracy of location determination is adjusted taking into account that the position determination is additionally performed using a deduced reckoning position estimate obtained from a deduced reckoning navigation device of the vehicle. This approach is only applied in case the respective grid point is located within a maximum predefined distance from a grid point for which the unadjusted associated accuracy of location determination fulfills the second minimum quality criterion. This minimizes the risk that due to accumulating errors arising from the deduced reckoning navigation the effective accuracy of location determination is decreasing so much that in practice the achieved accuracy is not acceptable anymore, e.g. not fulfilling the second minimum quality criterion anymore.

It further has to be noted that the above mentioned second minimum quality criterion may be tightened up for certain grid points that are defining the boundaries confining the work area 108. The reason is that under no circumstances the mower is allowed to leave the work area of 108. By tightening up the second minimum quality criterion, the location determination for these grid points at the boundaries can be performed with even higher accuracy thus minimizing the risk that due to navigational errors the mower is unintentionally leaving the area 108.

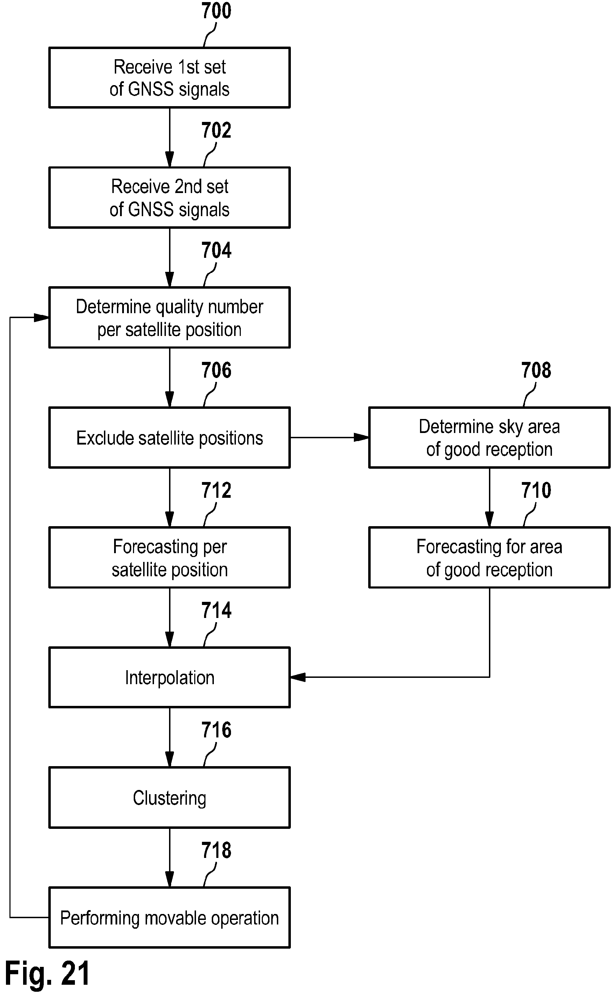

Figure 21 is a flowchart of operating a robotic vehicle for movable operation in a work area. The method starts with step 700 and reception of the first set of GNSS signals from the vehicle base. In parallel in step 702, a second set of GNSS signals is received from the GNSS receiver of the vehicle. Thereupon, in step 704 a comparison is made of the signal qualities of the first and second set of GNSS signals and a quality number per satellite position is derived.

Satellite positions which have a quality number that does not fulfill the predefined quality criterion are then excluded in this step 706. For the remaining satellites and the respective GNSS signals an accuracy of a location determination is then determined and stored together with the point in time of GNSS signal reception and grid point in a dataset.

Steps 708 and 710 are optional: in step 708 a sky area of good reception is determined which comprises at least some of the satellite positions for which the quality number of that satellite positions fulfills a respective minimum quality criterion. Thereupon, in step 710 for this area of good reception a forecasting of receiving GNSS signals from satellites located in this area of good reception is being made for forecasting an accuracy of a location determination for points in time future to the respective point in time when the signals were required in step 700 and 702. The forecasting is made for example using Ephemerides, Almanacs and satellite repeat cycles applied on the first or second set of GNSS signals received in steps 700 and 702. For this forecasting, a satellite is allowed to appear anywhere within the whole sky area of good reception. The forecasted accuracy of location determination is then stored together with the future point in time and grid point in the dataset.

In case steps 708 and 710 are not used, the method continues after step 706 with step 712 and the forecasting of an accuracy of a location determination for points in time future to the respective point in time when the signals were required in step 700 and 702. The forecasting is made for example using Ephemerides, Almanacs and satellite repeat cycles applied on the first or second set of GNSS signals received in steps 700 and 702. Compared to the forecasting that was made with respect to steps 708 and 710, this forecasting is based on the discrete satellite positions and sky areas around these satellite positions: in steps 700 and 702 the first and second GNSS signals were received from satellites that were located at certain satellite positions in the sky above the base and the vehicle. In step 712 a forecasting of a reception of first or second GNSS signals for future points in time from satellites located at a sky area around these certain satellite positions is made. From this forecasting, an accuracy of location determination is then determined and stored together with the future point in time and grid point in the dataset.

In optional step 714 an interpolation is being made for at least some of the grid points for which the accuracy of a location determination for certain points in time future to the respective point in time of reception is yet unavailable. I.e. for some points in time in the future, the accuracy of a location determination may already available and for some others not. In the latter case the interpolation may be used to complete the dataset regarding further future time points. The interpolation is considering grid points for which the accuracy of an already available location determination for future points in time is available. The interpolation is resulting in estimated accuracies of location determination for the grid points for which the interpolation was performed.

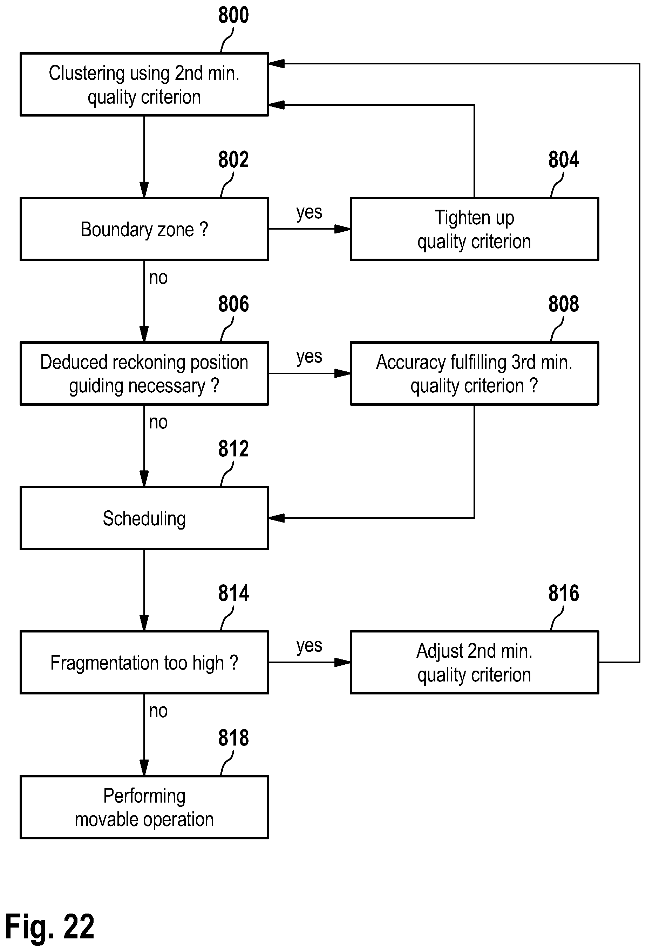

Step 716 comprises a clustering which was already at least partially described in figure 15 and will be further described in figure 22. In essence, the clustering is resulting in sets of clustered grid points, wherein for each set of the clustered grid points starting from a respective point in time moving of the vehicle along said set of clustered grid points guided using GNSS signals received the planning of the movable operation comprises clustering determination during the guiding fulfilling the second minimum quality criterion. Further, the clustering is based on the parameter characterizing the soil (e.g. growth rate of plants, slip, slope of the area to be processed etc.).

In step 718 the actual movable operation is performed which includes a planning of the operation. The planning comprises a scheduling of the movable operation for obtaining a movement trajectory of the mower for performing the movable operation, the scheduling comprising selecting one or more of the sets of clustered grid points, the movement trajectory comprising the grid points of the sets of clustered grid points.

During the performance of the mowing operation, for each grid point traveled by the vehicle new GNSS signals may be received from the base and the vehicle receiver. All the signals may then be subject to the method steps 704-716, which are repeated accordingly. The more often this process is repeated, the more precise the guidance of the vehicle can be even in the presence of shadows from full satellite reception because the dataset representing the grid points and associated accuracies of the location determination and time points is more and more filled such that even for critical grid points the clustering is able to find an appropriate point in time for which guidance of the vehicle is possible with the required accuracy.

Figure 22 is a flowchart illustrating a method of clustering of grid points. The method starts in step 800 with the clustering according to a second minimum quality criterion: the goal is that sets of clustered grid points are obtained that - starting from a certain future time point - can be traveled by the vehicle and for which (during this travel) a guidance of the vehicle using GNSS signals received during said traveling (movement) is possible with an accuracy of the location determination during the guiding fulfilling a certain (second) minimum quality criterion. In this manner, it is ensured that GNSS based guidance, eventually assisted by deduced reckoning position estimates, is possible at a decent positioning quality. It has to be noted that the clustering according to the parameter characterizing the soil is not discussed here in further detail.

In optional step 802 it is checked if grid points are forming a boundary zone confining the work area. If this is the case, the method continues with step 804 in which the second minimum quality criterion is tightened up and the method jumps back to step 800 which then uses for the grid points of the boundary zone the tightened up (enforced) quality criterion. It has to be noted here, that this procedure may also be reversed in that first all grid points forming the boundaries are identified and then for these identified grid points the quality criterion is tightened up. For the remaining grid points the quality criterion is set to the (non-tightened-up) second minimum quality criterion and thereupon the clustering process is performed. With this approach, a repetition may not be necessary.

In step 806 grid points are identified for which a deduced reckoning position guiding may be necessary. Generally spoken, these may be any grid points which do not yet fulfill the second minimum quality criterion. For the identified grid points, in step 808 it is checked whether the grid points are located within a maximum predefined distance from a grid point for which the unadjusted associated accuracy of location determination fulfills the second minimum quality criterion. In case the check is positive, for a grid point the associated accuracy of location determination is adjusted taking into account that the position determination is additionally performed using a deduced reckoning position estimate obtained from a deduced reckoning navigation device of the vehicle.

The method continues in step 812 which is a scheduling of the movable operation for obtaining a movement trajectory of the vehicle for performing the movable operation, the scheduling comprising selecting one or more of the sets of clustered grid points, the movement trajectory comprising the grid points of the sets of clustered grid points. Each set of clustered grid points comprises respective time points and accuracies.

In step 814 it is additionally checked wherein the movement trajectory obtained for a single contiguous movable operation results in a fragmentation degree of the work area. The fragmentation degree is describing the degree of fragmentation of the work area with respect to subareas of the area covered by the trajectory. In case the fragmentation degree is above a predefined fragmentation threshold, the second minimum quality criterion is relaxed within specified limits in step 816 and the clustering process is repeated starting again from step 800. This repetition is performed with a more and more relaxing the second quality criterion until the degree of fragmentation is below the predefined fragmentation threshold.

Finally, in step 818 the movable operation is performed.

A correspondence with the clustering process of figure 15 results from the fact that steps 800-808 may be comprised by step 600, step 812 corresponds to step 602, step 814 corresponds to step 604, and step 818 corresponds to step 608.

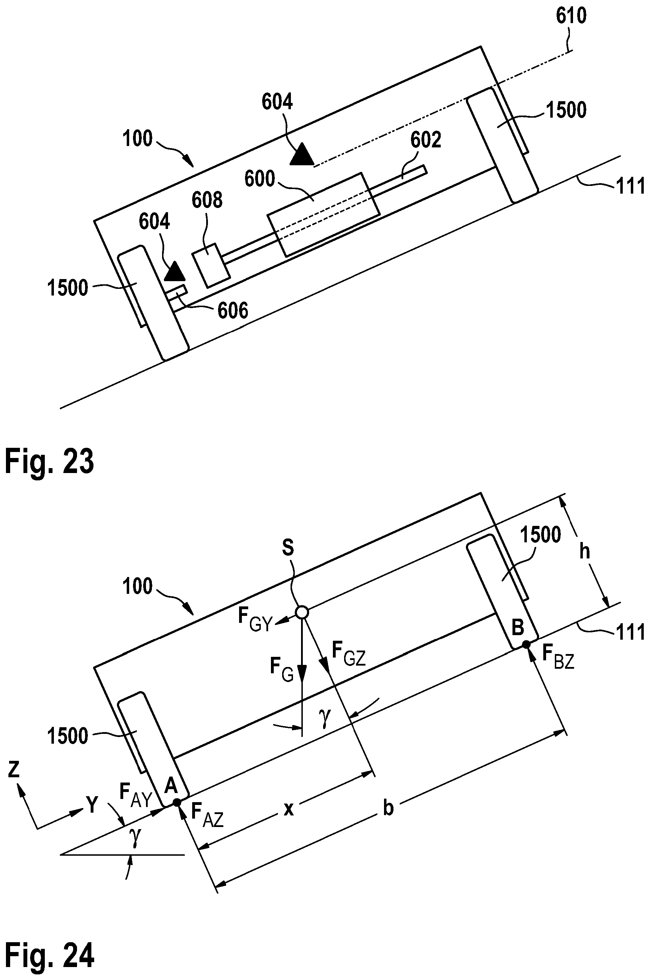

Figure 23 shows a schematic cross-section of a vehicle 100, for example vehicle 100, which was the vehicle discussed above with respect to the previous figures, in particular figures 8A and 9. As described above, the 1500 drive wheels located on the side of the vehicle ensure that a torque is transmitted to the ground 111 via the engine 1506, so that the vehicle moves forward. In order to achieve a desired weight load with respect to the wheels 1500, a mass component 600 is arranged in the vehicle 100. The mass component 600 is movable by an actuator 608 in the transverse direction of the vehicle along an axis or a rail 602. In order to determine the lateral position of the mass component 600 in the vehicle, the lateral position of the center of mass S of the vehicle is determined. This determination is carried out, for example, via one or more sensor modules 604.

For example, the sensor module 604, which is exemplarily arranged in Figure 23 above the mass component, is an inclination sensor. A further possibility is that the sensor module is assigned to one or both of the drive wheels 1500 and, for example, records the weight force acting on axis 606 and thus the weight force acting on the drive wheel 1500. The knowledge of the weight of the vehicle 100 acting on a driving wheel or the knowledge of the inclination or even the exact knowledge of the weight distribution of the weight of the vehicle 1500 acting on both driving wheels makes it possible to determine the position of the center of mass of the vehicle 100 in the lateral direction, i.e. in the direction of the extension of the axle 606. If, for example, the aim is to ensure that the weight of the two drive wheels 1500 is always identical regardless of the slope, the controller of the vehicle 100 can now shift the mass component via actuator 608 so far to the left or right along the axis 602 depending on the current position of the center of mass so that the desired identical weight loads of the drive wheels 1500 can be achieved for a given slope.

It should be noted that the mass component 600 must have a sufficiently high weight to allow the desired weight distribution of the driving wheels 1500 for different inclination slopes between 0 and 60%, preferably between 0 and 50% with a given maximum displacement along the axis 602. In a concrete example, the mass of the mass component shall be sufficient to allow the desired weight distribution of the driving wheels 1500 for different angles of inclination between 0 and 60% with a maximum displacement of half, preferably one third, extremely preferably one quarter of the width of the vehicle.

Figure 24 shows a further schematic cross-section of a vehicle 100 located on an inclined surface 111. The vehicle of figure 24 corresponds to the vehicle in figure 23. Additionally, details regarding the mathematical background are given for determining the center of mass.

Assuming a mass G of 15,5 kg, a wheelbase of 415 mm, and a fixed height h of the center of mass of 150mm, at a slope of 45% (angle Y= 24,2°), and the center of mass being located at x= 275 mm, the force acting on the wheels can be calculated to $F_{AZ}$= 69,5 N and $F_{BZ}$=69,2 N. This corresponds to a lateral displacement of the center of mass by 67 mm relative to the center of the vehicle:

$$F_{GY} = F_G * \sin Y$$

$$F_{GZ} = F_G * \cos Y$$

This results in $F_{GY}$=62,4 N and $F_{GZ}$= 138,7 N. Further,

$$\sum M_A = F_{BZ} * b + F_{GY} * h - F_{GZ} * x = 0$$

$$F_{BZ} = \frac{-FGY * h + FGZ * x}{b}$$

$$\sum F_Z = F_{BZ} + F_{AZ} - F_{GZ} = 0$$

$$F_{AZ} = F_{GZ} - F_{BZ}$$

$$\sum F_Y = F_{AY} - F_{GY} = 0$$

$$F_{AY} = F_{GY}$$

with $F_{AY}$ = 62,4 N.

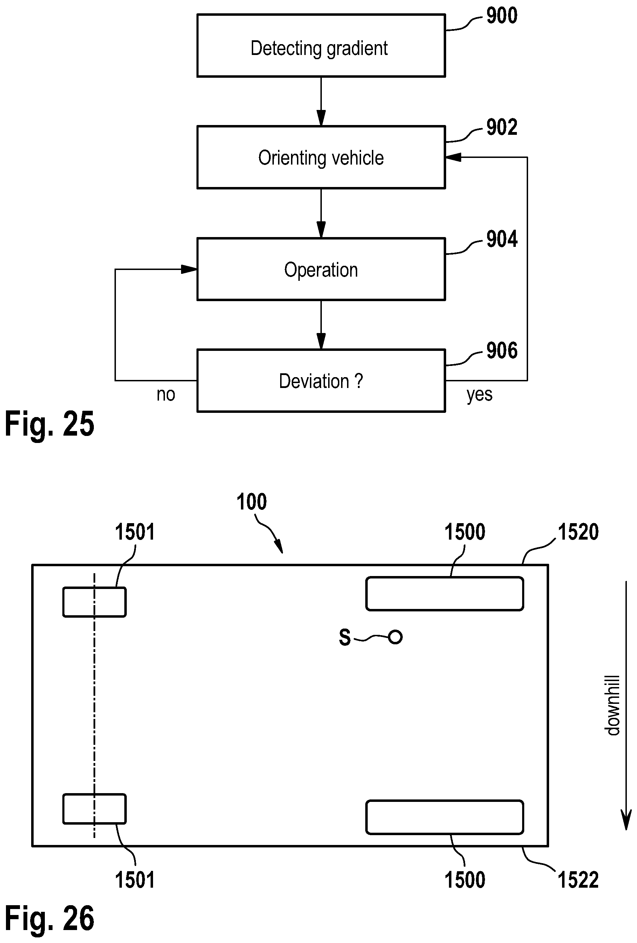

Fig. 25, which is not part of the invention, is a flowchart illustrating a method of operating a vehicle, for example an autonomous mower, for performing a movable operation in a work area, the movable operation comprising a soil cultivation, for example a mowing operation. In step 900 the sensor of the vehicle, for example a sensor as the sensor 604 as described before in fig. 23, detects a gradient of a slope of a subarea on which the vehicle is currently located. In another example, the sensor detects (i.e. obtains) the information regarding direction of the gradient of the sloped subarea on a relief map which contains that information.

In step 902 the vehicle orientates itself in such a manner that the side of the vehicle on which the center of mass is located is pointing uphill. This is illustrated in fig. 26, which is not part of the invention. Fig. 26 shows a schematic of a vehicle comprising wheels 1500. The vehicle was already described above in fig. 8a. The difference with the vehicle of fig. 8a is that now the center of mass S is not symmetrically arranged in the middle between the two wheels 1500, but it is shifted to the right lateral side 1520 of the vehicle. Due to the orientation of the vehicle in step 902 the right side 1520 points in uphill direction and the side 1522 points in downhill direction. The gradient of the sloped subarea is for example parallel with the orientation of the axis of the wheels 1500.

It has to be noted that in case the sensor detects (i.e. obtains) the information regarding direction of the gradient of the sloped subarea on a relief map which contains that information, it is also possible to use an average gradient direction obtained from that map and orient the vehicle with respect to the average gradient direction.

In step 904 the movable operation, e.g. the mowing operation, is performed. While performing the movable operation, a check is performed by the sensor in step 906 whether the current direction of gradient of the currently worked sloped subarea deviates from the direction of the gradient determined in step 900 by a predefined threshold. If this is the case, the method continues with step 902 and a reorientation of the vehicle according to the new direction of the gradient. If this is not the case, the method continues with the movable operation in step 904.

List of reference numerals

10 trajectory
11 sub-trajectory
12 first section
13 curved subsection
14 middle section
15 straight subsection
16 second section
17 curved subsection
18 end point
19 straight section
20 end point
22 curved subsection
24 curved subsection
26 constant subsection
30 boundary
32 boundary
34 obstacle
36 obstacle
40 axis of reflection
50 contour line
60 rotational axis
100 vehicle
102 GNSS receiver
104 base
106 GNSS receiver
107 cultivated region
108 work area
109 uncultivated region
110 tile
111 sloped subarea
112 grid point
113 plane of constant height
114 first set of GNSS signals
116 second set of GNSS signals
118 controller
120 processor
122 memory
124 instructions
200 satellite

202 skyplot
204 circle
205 line
206 zone
208 representation of a satellite
300 shadow area
302 area of good reception
304 boundary
400 grid point
402 grid point
404 grid point
406 contour line
408 area
410 trajectory
500 tree
502 shadow area
504 grid point
506 grid point
600 mass component
602 axis
604 sensor module
606 axis
608 actuator
1200 trajectory
1206 subarea
1208 subarea
1210 area limit
1212 direction of gradient
1300 clustered grid point
1302 set
1500 driving wheel
1501 wheel
1502 sensor
1504 blade
1506 engine
1508 battery
1510 moisture sensor
d parameter
D1 distance
D3 distance
D4 distance
D5 distance
Dcm distance
Drw distance
Fg gravity force
Fn normal force
Fs downhill slope force
L1 length
L2 length
R1 curvature radius
R2 curvature radius
R3 curvature radius
R4 curvature radius
S center of mass
W1 width
W2 width
$\alpha$ climbing angle
$\alpha$max maximum climbing angle

βmax maximum climbing angle
γ angle of slope

## Claims

1. A battery operated robotic vehicle (100) for movable operation in a work area (108), the vehicle comprising a battery (1508) powering an engine (1506) of the vehicle, the movable operation comprising a soil cultivation, the vehicle (100) comprising a controller comprising a processor (120) and a memory (122), the memory comprising instructions (124), the vehicle further comprising two simultaneously driven drive wheels (1500), a mass component (600) essential for a center of mass (S) of the vehicle (100), an actuator (608) and a sensor module (604) in communicative connection with the controller, the wheels (1500) being spaced apart from each other in the transverse direction of the vehicle (100), the mass component (600) being displaceable by the actuator (608) in the transverse direction along a straight line, the sensor module (604) being adapted for determining of a weight load of one of the wheels (1500), for determining in the transverse direction the position of the center of mass (S) of the vehicle (100) from the weight load, and for signaling the position to the controller, wherein the processor is configured to execute the instructions to cause the controller to control the actuator (608) for a movement of the mass component (600) along the straight line depending on the signaled position of the center of mass (S), wherein the processor is configured to execute the instructions to further cause the controller (118) to control the vehicle (100) to perform the movable operation with the soil cultivation at least in a sloped subarea (111) of the work area (108) following a scheduled movement trajectory (10) covering the subarea (111) with a side of the vehicle facing up the sloped subarea (111) being always the same within the subarea (111), wherein the scheduled movement trajectory (10) within the sloped subarea (111) has a zigzag form comprising a plurality of sub-trajectories (11) with mutually opposite directions of movement for climbing the slope of the subarea (111), wherein for each two sub-trajectories (11) running directly adjacent to one another the direction of the movement of the vehicle (100) is respectively opposite with one direction of movement comprising a forward movement of the vehicle (100) and the other direction of the movement comprising a backward movement of the vehicle (100).

2. The robotic vehicle (100) of claim 1, wherein in the vertical direction of the vehicle (100) the center of mass (S) of the mass component (600) is located below the upper edge (610) of the drive wheels (1500).

3. The robotic vehicle (100) of any of the previous claims, the sensor module (604) being adapted for determining a lateral inclination of the vehicle (100) and for performing the determination of the position of the center of mass (S) of the vehicle (100) from the inclination.

4. The robotic vehicle (100) of any of the previous claims, wherein execution of the instructions (124) by the processor (120) further causes the controller for controlling the actuator (608) for a movement of the mass component (600) such that the weight load of both wheels (1500) is equal.

5. The robotic vehicle (100) of any of the previous claims, the mass component (600) being displaceable along a guide rail or guide rod (602) oriented in the transverse direction.

6. The robotic vehicle of any of the previous claims, wherein controlling the vehicle (100) to follow the zigzag form of the scheduled movement trajectory (10) comprises for each sub-trajectory (11) controlling the vehicle (100) to perform within a first end section (12) of the respective sub-trajectory (11) a first combined climbing operation, the first combined climbing operation combining a first varying climbing operation and a first constant climbing operation, the first varying climbing operation following a first curved subsection (13) of the respective sub-trajectory (11), the first constant climbing operation following a first constant subsection (15) of the respective sub-trajectory (11), a second endpoint of the first curved subsection (13) coinciding with a first endpoint of the first constant subsection (15), wherein such a varying climbing operation comprises changing an orientation of the vehicle (100) following a curved subsection (13, 17, 22, 24) of the respective sub-trajectory (11), wherein starting at a first end point of the respective curved subsection (13, 17, 22, 24) following the curved subsection (13, 17, 22, 24) to a second endpoint of the subsection a climbing angle continuously increases until a maximum climbing angle ($\alpha_{max}$, $\beta_{max}$) is reached at the second end point, wherein the climbing angle is an angle between a tangent touching the curved subsection and a reference tangent touching the curved subsection at the first end point, wherein such a constant climbing operation comprises maintain a constant orientation of the vehicle (100) following a constant subsection of the respective sub-trajectory (11), wherein for each two sub-trajectories (11) running directly adjacent to one another the first end sections are located on opposite ends of the respective sub-trajectories (11).

7. The robotic vehicle (100) of claim 6, wherein each sub-trajectory (11) further comprises a second end section (16), the first and second end section (12; 16) being located on opposite ends of the respective sub-trajectory (11), wherein controlling the vehicle (100) to follow the zigzag form of the scheduled movement trajectory (10) further comprises for each sub-trajectory (11) controlling the vehicle (100) to perform within the second end section (16) of the respective sub-trajectory (11) a second varying climbing operation following a second curved subsection (17) of the respective sub-trajectory (11).

8. The robotic vehicle (100) of claim 7, wherein for each two sub-trajectories (11) running directly adjacent to one another the second endpoint of the first constant subsection (15) of a first one of the two sub-trajectories (11) coincides with the first end point of the second curved subsection (17) of a second one of the two sub-trajectories (11).

9. The robotic vehicle (100) of claim 8 or 7, wherein controlling the vehicle (100) to follow the zigzag form of the scheduled movement trajectory (10) further comprises for each sub-trajectory (11) controlling the vehicle (100) to perform within the first end section (12) of the respective sub-trajectory (11):

   • a third varying climbing operation following a third curved subsection (22) of the first end section (12) and
   • a second combined climbing operation, the second combined climbing operation combining a fourth varying climbing operation and a second constant climbing operation, the fourth varying climbing operation following a fourth curved subsection (24) of the respective sub-trajectory (11), the second constant climbing operation following a second constant subsection (26) of the respective sub-trajectory (11), a second endpoint of the fourth curved subsection (24) coinciding with a first endpoint of the second constant subsection (26),

   wherein for each sub-trajectory (11) a first endpoint of the third curved subsection (22) of the respective sub-trajectory (11) coincides with the second endpoint of the first constant subsection (15) of the respective sub-trajectory (11) and a second endpoint of the third curved subsection (22) of the respective sub-trajectory (11) coincides with the first endpoint of the fourth curved subsection (24) of the respective sub-trajectory (11).

10. The robotic vehicle (100) of any of the previous claims, wherein the execution of the instructions (124) by the processor (120) further causes the vehicle (100) to discretize the work area (108) using a gird comprising a plurality of grid points (112) and to plan the movable operation, the grid points (112) being a representation of a division of the work area (108) into a set of individual tiles, each grid point being assigned with one or more parameters characterizing a part of the work area (108) represented by said grid point, the planning comprising clustering of at least some of the grid points (112), wherein the clustering results in sets (1302) comprising some of the grid points (112), each set (1302) representing a subarea (111) of the work area (108), wherein for a given one of the sets (1302) for all grid points (112) in the respective set (1302) a value of a parameter characterizing the soil represented by said grid points (112) satisfies a soil criterion for performing the movable operation, wherein the performing of the movable operation is based on the sets (1302) of grid points (112).

11. The robotic vehicle (100) of claim 10, the vehicle (100) comprising a Global Navigation Satellite System, GNSS, receiver (1502), wherein execution of the instructions (124) by the processor (120) further causes the vehicle (100) to perform an accuracy of location determination process comprising:

   • receiving at a first point in time a first set of GNSS signals (114) from a vehicle base (104),
   • receiving at the first point in time a second set of GNSS signals (114) from the GNSS receiver (1502),
   • determining an accuracy of a location determination, the location determination being based on the second set of GNSS signals (114), the determination of the accuracy being based on a comparison of the signal qualities of the first set of GNSS signals (114) and the second set of GNSS signals (114),
   • wherein for the planning of the movable operation at least some of the grid points (112) for which an accuracy of the location determination is available and the respective accuracies of the location determination are used.

12. A method for operating the battery operated robotic vehicle of claim 1 the method comprising executing the instructions in the memory of the vehicle by the processor to cause the controller to control the actuator for a movement of the mass component along the straight line depending on the signaled position of the center of mass (S), wherein the method further comprises executing the instructions in the memory of the vehicle by the processor to cause the controller to control the vehicle to perform the movable operation with the soil cultivation at least in a sloped subarea (111) of the work area (108) following a scheduled movement trajectory (10) covering the subarea (111) with a side of the vehicle facing up the sloped subarea (111) being always the same within the subarea (111), wherein the scheduled movement trajectory (10) within the sloped subarea (111) has a zigzag form comprising a plurality of sub-trajectories (11) with mutually opposite directions of movement for climbing the slope of the subarea (111), wherein for each two sub-trajectories (11) running directly adjacent to one another the direction of the movement of the vehicle (100) is respectively opposite with one direction of movement comprising a forward movement of the vehicle (100) and the other direction of the movement comprising a backward movement of the vehicle (100).

13. A computer program product comprising computer executable instructions (124) to perform the method steps executed by the processor in claim 12.

**Patentansprüche**

1. Batteriebetriebenes Roboterfahrzeug (100) zum beweglichen Betrieb in einem Arbeitsbereich (108), wobei das Fahrzeug eine Batterie (1508) umfasst, die einen Motor (1506) des Fahrzeugs mit Energie versorgt, wobei der bewegliche Betrieb eine Bodenbearbeitung umfasst, wobei das Fahrzeug (100) ein Steuergerät umfasst, das einen Prozessor (120) und einen Speicher (122) umfasst, wobei der Speicher Anweisungen (124) umfasst, wobei das Fahrzeug ferner zwei gleichzeitig angetriebene Antriebsräder (1500), eine Massenkomponente (600), die wesentlich zur Lage des Schwerpunkts (S) des Fahrzeugs (100) beiträgt, einen Stellantrieb (608) und ein Sensormodul (604) in Kommunikationsverbindung mit dem Steuergerät umfasst, wobei die Antriebsräder (1500) in Querrichtung des Fahrzeugs (100) voneinander beabstandet sind, wobei die Massenkomponente (600) durch den Stellantrieb (608) in Querrichtung entlang einer Geraden verschiebbar ist, wobei das Sensormodul (604) dafür ausgelegt ist, eine Gewichtsbelastung eines der Antriebsräder (1500) zu bestimmen, in Querrichtung die Position des Schwerpunkts (S) des Fahrzeugs (100) aus der Gewichtsbelastung zu bestimmen und die Position an das Steuergerät zu signalisieren, wobei der Prozessor so eingerichtet ist, die Anweisungen auszuführen, um das Steuergerät zu veranlassen, den Stellantrieb (608) für eine Bewegung der Massenkomponente (600) entlang der Geraden in Abhängigkeit von der signalisierten Position des Schwerpunkts (S) zu steuern, wobei der Prozessor so eingerichtet ist, die Anweisungen auszuführen, um ferner das Steuergerät (118) zu veranlassen, das Fahrzeug (100) zu steuern, um den beweglichen Betrieb mit der Bodenbearbeitung zumindest in einem geneigten Teilbereich (111) des Arbeitsbereichs (108) gemäß einer geplanten Bewegungsbahn (10) durchzuführen, die den Teilbereich (111) abdeckt, wobei innerhalb des Teilbereichs (111) stets dieselbe Seite des Fahrzeugs der Steigung des geneigten Teilbereichs (111) bergauf zugewandt ist, wobei die geplante Bewegungsbahn (10) innerhalb des geneigten Teilbereichs (111) eine Zickzackform aufweist, die eine Vielzahl von Untertrajektorien (11) mit jeweils entgegengesetzten Bewegungsrichtungen zum Hinauffahren der Steigung des Teilbereichs (111) umfasst, wobei bei jeweils zwei unmittelbar nebeneinander verlaufenden Untertrajektorien (11) die Bewegungsrichtung des Fahrzeugs (100) jeweils entgegengesetzt ist, wobei eine Bewegungsrichtung eine Vorwärtsbewegung des Fahrzeugs (100) umfasst und die andere Bewegungsrichtung eine Rückwärtsbewegung des Fahrzeugs (100) umfasst.

2. Das Roboterfahrzeug (100) nach Anspruch 1, wobei in Vertikalrichtung des Fahrzeugs (100) der Schwerpunkt (S) der Massenkomponente (600) unterhalb der oberen Kante (610) der Antriebsräder (1500) liegt.

3. Das Roboterfahrzeug (100) nach einem der vorhergehenden Ansprüche, wobei das Sensormodul (604) dafür ausgelegt ist, eine seitliche Neigung des Fahrzeugs (100) zu bestimmen und die Bestimmung der Position des Schwerpunkts (S) des Fahrzeugs (100) aus der Neigung durchzuführen.

4. Das Roboterfahrzeug (100) nach einem der vorhergehenden Ansprüche, wobei die Ausführung der Anweisungen (124) durch den Prozessor (120) ferner dazu führt, dass das Steuergerät den Stellantrieb (608) für eine Bewegung der Massenkomponente (600) so steuert, dass die Gewichtsbelastung beider Antriebsräder (1500) gleich ist.

5. Das Roboterfahrzeug (100) nach einem der vorhergehenden Ansprüche, wobei die Massenkomponente (600) entlang einer in Querrichtung ausgerichteten Führungsschiene oder Führungsstange (602) verschiebbar ist.

6. Das Roboterfahrzeug nach einem der vorhergehenden Ansprüche, wobei das Steuern des Fahrzeugs (100) zum Verfolgen der Zickzackform der geplanten Bewegungsbahn (10) für jede Untertrajektorie (11) umfasst, das Fahrzeug (100) innerhalb eines ersten Endabschnitts (12) der jeweiligen Untertrajektorie (11) einen ersten kombinierten Steigvorgang ausführen zu lassen, wobei der erste kombinierte Steigvorgang einen ersten variablen Steigvorgang und einen ersten konstanten Steigvorgang kombiniert, wobei der erste variable Steigvorgang einem ersten gekrümmten Unterabschnitt (13) der jeweiligen Untertrajektorie (11) folgt, wobei der erste konstante Steigvorgang einem ersten konstanten Unterabschnitt (15) der jeweiligen Untertrajektorie (11) folgt, wobei ein zweiter Endpunkt des ersten gekrümmten Unterabschnitts (13) mit einem ersten Endpunkt des ersten konstanten Unterabschnitts (15) zusammenfällt, wobei ein solcher variabler Steigvorgang umfasst, eine Ausrichtung des Fahrzeugs (100) zu ändern, indem einem gekrümmten Unterabschnitt (13, 17, 22, 24) der jeweiligen Untertrajektorie (11) gefolgt wird, wobei, ausgehend von einem ersten Endpunkt des jeweiligen gekrümmten Unterabschnitts (13, 17, 22, 24), beim Verfolgen des gekrümmten Unterabschnitts (13, 17, 22, 24) bis zu einem zweiten Endpunkt des Unterabschnitts ein Steigwinkel kontinuierlich zunimmt, bis an dem zweiten Endpunkt ein maximaler Steigwinkel ($\alpha_{max}$, $\beta_{max}$) erreicht ist, wobei der Steigwinkel ein Winkel zwischen einer Tangente ist, die den gekrümmten Unterabschnitt berührt, und einer Referenztangente, die den gekrümmten Unterabschnitt am ersten Endpunkt berührt, wobei ein solcher konstante Steigvorgang umfasst, eine konstante Ausrichtung des Fahrzeugs (100) beizubehalten, indem einem konstanten Unterabschnitt der jeweiligen Untertrajektorie (11) gefolgt wird, wobei bei jeweils zwei unmittelbar nebeneinander verlaufenden Untertrajektorien (11) die ersten Endabschnitte an gegenüberliegenden Enden der jeweiligen Untertrajektorien (11) angeordnet sind.

7. Das Roboterfahrzeug (100) nach Anspruch 6, wobei jede Untertrajektorie (11) ferner einen zweiten Endabschnitt (16) umfasst, wobei der erste und der zweite Endabschnitt (12; 16) an gegenüberliegenden Enden der jeweiligen Untertrajektorie (11) angeordnet sind, wobei das Steuern des Fahrzeugs (100) zum Verfolgen der Zickzackform der geplanten Bewegungsbahn (10) ferner umfasst, für jede Untertrajektorie (11) das Fahrzeug (100) innerhalb des zweiten Endabschnitts (16) der jeweiligen Untertrajektorie (11) einen zweiten variablen Steigvorgang ausführen zu lassen, der einem zweiten gekrümmten Unterabschnitt (17) der jeweiligen Untertrajektorie (11) folgt.

8. Das Roboterfahrzeug (100) nach Anspruch 7 oder 6, wobei bei jeweils zwei unmittelbar nebeneinander verlaufenden Untertrajektorien (11) der zweite Endpunkt des ersten konstanten Unterabschnitts (15) einer ersten der beiden Untertrajektorien (11) mit dem ersten Endpunkt des zweiten gekrümmten Unterabschnitts (17) einer zweiten der beiden Untertrajektorien (11) zusammenfällt.

9. Das Roboterfahrzeug (100) nach Anspruch 8 oder 7, wobei das Steuern des Fahrzeugs (100) zum Verfolgen der Zickzackform der geplanten Bewegungsbahn (10) ferner umfasst, für jede Untertrajektorie (11) das Fahrzeug (100) innerhalb des ersten Endabschnitts (12) der jeweiligen Untertrajektorie (11) ausführen zu lassen:

• einen dritten variablen Steigvorgang, der einem dritten gekrümmten Unterabschnitt (22) des ersten Endabschnitts (12) folgt, und
• einen zweiten kombinierten Steigvorgang, wobei der zweite kombinierte Steigvorgang einen vierten variablen Steigvorgang und einen zweiten konstanten Steigvorgang kombiniert, wobei der vierte variable Steigvorgang einem vierten gekrümmten Unterabschnitt (24) der jeweiligen Untertrajektorie (11) folgt, wobei der zweite konstante Steigvorgang einem zweiten konstanten Unterabschnitt (26) der jeweiligen Untertrajektorie (11) folgt, wobei ein zweiter Endpunkt des vierten gekrümmten Unterabschnitts (24) mit einem ersten Endpunkt des zweiten konstanten Unterabschnitts (26) zusammenfällt,

wobei für jede Untertrajektorie (11) ein erster Endpunkt des dritten gekrümmten Unterabschnitts (22) der jeweiligen Untertrajektorie (11) mit dem zweiten Endpunkt des ersten konstanten Unterabschnitts (15) der jeweiligen Untertrajektorie (11) zusammenfällt und ein zweiter Endpunkt des dritten gekrümmten Unterabschnitts (22) der jeweiligen Untertrajektorie (11) mit dem ersten Endpunkt des vierten gekrümmten Unterabschnitts (24) der jeweiligen Untertrajektorie (11) zusammenfällt.

10. Das Roboterfahrzeug (100) nach einem der vorhergehenden Ansprüche, wobei die Ausführung der Anweisungen (124) durch den Prozessor (120) ferner dazu führt, dass das Fahrzeug (100) den Arbeitsbereich (108) mithilfe eines Rasters, das eine Vielzahl von Rasterpunkten (112) umfasst, diskretisiert und den beweglichen Betrieb plant, wobei die Rasterpunkte (112) eine Darstellung einer Aufteilung des Arbeitsbereichs (108) in eine Menge einzelner Kacheln sind, wobei jedem Rasterpunkt ein oder mehrere Parameter zugewiesen sind, die einen Teil des Arbeitsbereichs (108) charakterisieren, der durch den genannten Rasterpunkt repräsentiert ist, wobei die Planung ein Clustering von zumindest einigen der Rasterpunkte (112) umfasst, wobei das Clustering in Mengen (1302) resultiert, die einige der Rasterpunkte (112) umfassen, wobei jede Menge (1302) einen Teilbereich (111) des Arbeitsbereichs (108) repräsentiert, wobei für eine gegebene der Mengen (1302) für alle Rasterpunkte (112) in der jeweiligen Menge (1302) ein Wert eines Parameters, der den durch die genannten Rasterpunkte (112) repräsentierten Boden charakterisiert, ein Bodenkriterium für die Durchführung des beweglichen Betriebs erfüllt, wobei die Durchführung des beweglichen Betriebs auf den Mengen (1302) von Rasterpunkten (112) basiert.

11. Das Roboterfahrzeug (100) nach Anspruch 10, wobei das Fahrzeug (100) einen Empfänger (1502) für ein Globales Navigationssatellitensystem, GNSS, umfasst, wobei die Ausführung der Anweisungen (124) durch den Prozessor (120) ferner dazu führt, dass das Fahrzeug (100) einen Prozess zur Genauigkeit der Ortsbestimmung durchführt, umfassend:

- Empfangen, zu einem ersten Zeitpunkt, eines ersten Satzes von GNSS-Signalen (114) von einer Fahrzeugbasis (104),
- Empfangen, zu dem ersten Zeitpunkt, eines zweiten Satzes von GNSS-Signalen (114) von dem GNSS-Empfänger (1502),
- Bestimmen einer Genauigkeit einer Ortsbestimmung, wobei die Ortsbestimmung auf dem zweiten Satz von GNSS-Signalen (114) basiert, wobei das Bestimmen der Genauigkeit auf einem Vergleich der Signalqualitäten des ersten Satzes von GNSS-Signalen (114) und des zweiten Satzes von GNSS-Signalen (114) basiert,
- wobei für die Planung des beweglichen Betriebs zumindest einige der Rasterpunkte (112), für die eine Genauigkeit der Ortsbestimmung verfügbar ist, und die jeweiligen Genauigkeiten der Ortsbestimmung verwendet werden.

12. Verfahren zum Betrieb des batteriebetriebenen Roboterfahrzeugs nach Anspruch 1, wobei das Verfahren umfasst, dass der Prozessor die Anweisungen im Speicher des Fahrzeugs ausführt, um das Steuergerät zu veranlassen, den Stellantrieb für eine Bewegung der Massenkomponente entlang der Geraden in Abhängigkeit von der signalisierten Position des Schwerpunkts (S) zu steuern, wobei das Verfahren ferner umfasst, dass der Prozessor die Anweisungen im Speicher des Fahrzeugs ausführt, um das Steuergerät zu veranlassen, das Fahrzeug zu steuern, um den beweglichen Betrieb mit der Bodenbearbeitung zumindest in einem geneigten Teilbereich (111) des Arbeitsbereichs (108) gemäß einer geplanten Bewegungsbahn (10) durchzuführen, die den Teilbereich (111) abdeckt, wobei innerhalb des Teilbereichs (111) stets dieselbe Seite des Fahrzeugs der Steigung des geneigten Teilbereichs (111) bergauf zugewandt ist, wobei die geplante Bewegungsbahn (10) innerhalb des geneigten Teilbereichs (111) eine Zickzackform aufweist, die eine Vielzahl von Untertrajektorien (11) mit jeweils entgegengesetzten Bewegungsrichtungen zum Hinauffahren der Steigung des Teilbereichs (111) umfasst, wobei bei jeweils zwei unmittelbar nebeneinander verlaufenden Untertrajektorien (11) die Bewegungsrichtung des Fahrzeugs (100) jeweils entgegengesetzt ist, wobei eine Bewegungsrichtung eine Vorwärtsbewegung des Fahrzeugs (100) umfasst und die andere Bewegungsrichtung eine Rückwärtsbewegung des Fahrzeugs (100) umfasst.

13. Computerprogrammprodukt, das computerausführbare Anweisungen (124) umfasst, um die in Anspruch 12 vom Prozessor ausgeführten Verfahrensschritte auszuführen.

## Revendications

1. Véhicule robotisé fonctionnant sur batterie (100) pour un fonctionnement mobile dans une zone de travail (108), le véhicule comprenant une batterie (1508) alimentant un moteur (1506) du véhicule, le fonctionnement mobile comprenant une culture de sol, le véhicule (100) comprenant un dispositif de commande comprenant un processeur (120) et une mémoire (122), la mémoire comprenant des instructions (124), le véhicule comprenant en outre deux roues motrices entraînées simultanément (1500), un constituant de masse (600) essentiel à un centre de masse (S) du véhicule (100), un actionneur (608) et un module de capteur (604) en connexion de communication avec le dispositif de commande, les roues (1500) étant espacées l'une de l'autre dans la direction transversale du véhicule (100), le constituant de masse (600) pouvant être déplacé par l'actionneur (608) dans la direction transversale le long d'une ligne droite, le module de capteur (604) étant adapté pour déterminer une charge pondérale de l'une des roues (1500), pour déterminer dans la direction transversale la position du centre de masse (S) du véhicule (100) à partir de la charge pondérale, et pour signaler la position du dispositif de commande, dans lequel le processeur est configuré pour exécuter les instructions afin d'amener le dispositif de commande à commander l'actionneur (608) pour un mouvement du constituant de masse (600) le long de la ligne droite en fonction de la position signalée du centre de masse (S), dans lequel le processeur est configuré pour exécuter les instructions afin d'amener en outre le dispositif de commande (118) à commander le véhicule (100) pour réaliser le fonctionnement mobile avec la culture de sole au moins dans une sous-zone en pente (111) de la zone de travail (108) en suivant une trajectoire de mouvement planifiée (10) recouvrant la sous-zone (111) avec un côté du véhicule faisant face à la sous-zone en pente (111) étant toujours le même au sein de la sous-zone (111), dans lequel la trajectoire de mouvement planifiée (10) au sein de la sous-zone en pente (111) a une forme en zigzag comprenant une pluralité de sous-trajectoires (11) avec des directions de mouvement mutuellement opposées pour escalader la pente de la sous-zone (111), dans lequel pour chaque paire de sous-trajectoires (11) courant de manière directement adjacente l'une à l'autre, la direction du mouvement du véhicule (100) est respectivement opposée à une direction de mouvement comprenant un mouvement avant du véhicule (100) et l'autre direction du mouvement comprenant un mouvement arrière du véhicule (100).

2. Véhicule robotisé (100) selon la revendication 1, dans lequel dans la direction verticale du véhicule (100) le centre de masse (S) du constituant de masse (600) est situé en dessous du bord supérieur (610) des roues motrices (1500).

3. Véhicule robotisé (100) selon l'une quelconque des revendications précédentes, le module de capteur (604) étant adapté pour déterminer une inclinaison latérale du véhicule (100) et pour réaliser la détermination de la position du centre de masse (S) du véhicule (100) à partir de l'inclinaison.

4. Véhicule robotisé (100) selon l'une quelconque des revendications précédentes, dans lequel l'exécution des instructions (124) par le processeur (120) amène en outre le dispositif de commande à commander l'actionneur (608) pour un mouvement du constituant de masse (600) de telle sorte que la charge pondérale des deux roues (1500) est égale.

5. Véhicule robotisé (100) selon l'une quelconque des revendications précédentes, le constituant de masse (600) pouvant être déplacé le long d'un rail de guidage ou d'une tige de guidage (602) orientés dans la direction transversale.

6. Véhicule robotisé selon l'une quelconque des revendications précédentes, dans lequel la commande du véhicule (100) pour suivre la forme en zigzag de la trajectoire de mouvement planifiée (10) comprend pour chaque sous-trajectoire (11) la commande du véhicule (100) à réaliser au sein d'une première section d'extrémité (12) de la sous-trajectoire respective (11) un premier fonctionnement d'escalade combiné, le premier fonctionnement d'escalade combiné combinant un premier fonctionnement d'escalade variable et un premier fonctionnement d'escalade constant, le premier fonctionnement d'escalade variable suivant une première sous-section incurvée (13) de la sous-trajectoire (11) respective, le premier fonctionnement d'escalade constant suivant une première sous-section constante (15) de la sous-trajectoire (11) respective, un second point d'extrémité de la première sous-section incurvée (13) coïncidant avec un premier point d'extrémité de la première sous-section constante (15), dans lequel un tel fonctionnement d'escalade variable comprend le changement d'une orientation du véhicule (100) en suivant une sous-section incurvée (13, 17, 22, 24) de la sous-trajectoire (11) respective, dans lequel en partant au niveau d'un premier point d'extrémité de la sous-section incurvée (13, 17, 22, 24) respective en suivant la sous-section incurvée (13, 17, 22, 24) jusqu'à un second point d'extrémité de la sous-section, un angle d'escalade augmente en continu jusqu'à ce qu'un angle d'escalade maximal ($\alpha_{max}$, $\beta_{max}$) soit atteint au niveau du second point d'extrémité, dans lequel l'angle d'escalade est un angle entre une tangente en contact avec la sous-section incurvée et une tangente de référence en contact avec la sous-section incurvée au niveau du premier point d'extrémité, dans lequel un tel fonctionnement d'escalade constant comprend la conservation d'une orientation constante du véhicule (100) en suivant une sous-section constante de la sous-trajectoire (11) respective, dans lequel pour chaque paire de sous-trajectoires (11) courant de manière directement adjacente l'une à l'autre les premières sections d'extrémité sont situées à des extrémités opposées des sous-trajectoires (11) respectives.

7. Véhicule robotisé (100) selon la revendication 6, dans lequel chaque sous-trajectoire (11) comprend en outre une seconde section d'extrémité (16), les première et seconde sections d'extrémité (12 ; 16) étant situées à des extrémités opposées de la sous-trajectoire (11) respective, dans lequel la commande du véhicule (100) pour suivre la forme en zigzag de la trajectoire de mouvement planifiée (10) comprend en outre pour chaque sous-trajectoire (11) la commande du véhicule (100) pour réaliser au sein de la seconde section d'extrémité (16) de la sous-trajectoire respective (11) un deuxième fonctionnement d'escalade variable suivant une deuxième sous-section incurvée (17) de la sous-trajectoire respective (11).

8. Véhicule robotisé (100) selon la revendication 7, dans laquelle pour chaque paire de sous-trajectoires (11) courant de manière directement adjacente l'une à l'autre, le second point d'extrémité de la première sous-section constante (15) d'une première des deux sous-trajectoires (11) coïncide avec le premier point d'extrémité de la deuxième sous-section incurvée (17) d'une seconde parmi les deux sous-trajectoires (11).

9. Véhicule robotisé (100) selon la revendication 8 ou 7, dans lequel la commande du véhicule (100) pour suivre la forme en zigzag de la trajectoire de mouvement planifiée (10) comprend en outre pour chaque sous-trajectoire (11) la commande du véhicule (100) pour réaliser au sein de la première section d'extrémité (12) de la sous-trajectoire (11) respective :

   • un troisième fonctionnement d'escalade variable en suivant une troisième sous-section incurvée (22) de la première section d'extrémité (12) et

• un second fonctionnement d'escalade combiné, le second fonctionnement d'escalade combiné combinant un quatrième fonctionnement d'escalade variable et un deuxième fonctionnement d'escalade constant, le quatrième fonctionnement d'escalade variable suivant une quatrième sous-section incurvée (24) de la sous-trajectoire (11) respective, le deuxième fonctionnement d'escalade constant suivant une deuxième sous-section constante (26) de la sous-trajectoire (11) respective, un second point d'extrémité de la quatrième sous-section incurvée (24) coïncidant avec un premier point d'extrémité de la deuxième sous-section constante (26),

dans lequel pour chaque sous-trajectoire (11) un premier point d'extrémité de la troisième sous-section incurvée (22) de la sous-trajectoire (11) respective coïncide avec le second point d'extrémité de la première sous-section constante (15) de la sous-trajectoire (11) respective et un second point d'extrémité de la troisième sous-section incurvée (22) de la sous-trajectoire (11) respective coïncide avec le premier point d'extrémité de la quatrième sous-section incurvée (24) de la sous-trajectoire (11) respective.

10. Véhicule robotisé (100) selon l'une quelconque des revendications précédentes, dans lequel l'exécution des instructions (124) par le processeur (120) amène en outre le véhicule (100) à discrétiser la zone de travail (108) en utilisant une grille comprenant une pluralité de points de grille (112) et à planifier le fonctionnement mobile, les points de grille (112) étant une représentation d'une division de la zone de travail (108) en un ensemble de cases individuelles, chaque point de grille se voyant attribuer un ou plusieurs paramètres caractérisant une partie de la zone de travail (108) représentée par ledit point de grille, la planification comprenant le regroupement d'au moins certains des points de grille (112), dans lequel le regroupement résulte en des ensembles (1302) comprenant certains des points de grille (112), chaque ensemble (1302) représentant une sous-zone (111) de la zone de travail (108), dans lequel pour un ensemble donné parmi les ensembles (1302) pour tous les points de grille (112) dans l'ensemble (1302) respectif une valeur d'un paramètre caractérisant le sol représenté par lesdits points de grille (112) satisfait à un critère de sol pour réaliser le fonctionnement mobile, dans lequel la réalisation du fonctionnement mobile se base sur les ensembles (1302) de points de grille (112).

11. Véhicule robotisé (100) selon la revendication 10, le véhicule (100) comprenant un récepteur de système mondial de navigation par satellite ou GNSS (1502), dans lequel l'exécution des instructions (124) par le processeur (120) amène en outre le véhicule (100) à réaliser un processus de détermination d'exactitude de localisation comprenant les étapes consistant à :

• recevoir à un premier point du temps un premier ensemble de signaux GNSS (114) depuis une base de véhicule (104),
• recevoir au premier point du temps un second ensemble de signaux GNSS (114) depuis le récepteur GNSS (1502),
• déterminer une exactitude d'une détermination de localisation, la détermination de localisation étant basée sur le second ensemble de signaux GNSS (114), la détermination de l'exactitude étant basée sur une comparaison des qualités de signal du premier ensemble de signaux GNSS (114) et du second ensemble de signaux GNSS (114),
• dans lequel pour la planification du fonctionnement en mouvement au moins certains des points de grille (112) pour lesquels une détermination de l'exactitude de localisation est disponible et les exactitudes respectives de la détermination de localisation sont utilisés.

12. Procédé de fonctionnement du véhicule robotisé fonctionnant sur batterie selon la revendication 1, le procédé comprenant une étape consistant à faire exécuter les instructions dans la mémoire du véhicule par le processeur pour amener le dispositif de commande à commander l'actionneur pour un mouvement du constituant de masse le long de la ligne droite en fonction de la position signalée du centre de masse (S), dans lequel le procédé comprend en outre une étape consistant à faire exécuter les instructions dans la mémoire du véhicule par le processeur pour amener le dispositif de commande à commander le véhicule à réaliser le fonctionnement mobile avec la culture de sol au moins dans une sous-zone en pente (111) de la zone de travail (108) en suivant une trajectoire de mouvement planifiée (10) recouvrant la sous-zone (111) avec un côté du véhicule faisant face à la sous-zone en pente (111) étant toujours le même au sein de la sous-zone (111), dans lequel la trajectoire de mouvement planifiée (10) au sein de la sous-zone en pente (111) a une forme en zigzag comprenant une pluralité de sous-trajectoires (11) avec des directions de mouvement mutuellement opposées pour escalader la pente de la sous-zone (111), dans lequel pour chaque paire de sous-trajectoires (11) courant de manière directement adjacente l'une à l'autre, la direction du mouvement du véhicule (100) est respectivement opposée à une direction de mouvement comprenant un mouvement avant du véhicule (100) et l'autre direction du mouvement comprenant un mouvement arrière du véhicule (100).

13. Produit de programme informatique comprenant des instructions exécutables par ordinateur (124) pour réaliser les étapes de procédés exécutées par le processeur selon la revendication 12.

## Fig. 1

## Fig. 2

**Fig. 3**

**Fig. 4**

**Fig. 5**

34 36 111 Step 1: 11 17 16 107 17 15 13 10 14 12 Step 2: W₂

Fig. 6A

34

36

111

Step 3:

Step 4:

W$_2$

# Fig. 6B

Fig. 7

**Fig. 8A**

**Fig. 8B**

106

1510

100

1504

118

Controller

1500

1506

Engine

Battery

1508

1502

Fig. 9

Controller

118

Processor

120

Memory

122

Instructions

124

Fig. 10

**Fig. 11**

**Fig. 12**

**Fig. 13**

**Fig. 14**

Fig. 15

**Fig. 16**

1st set GNSS ~114

2nd set GNSS ~116

Controller

Processor ~120

Memory ~122

Instructions ~124

**Fig. 17**

Fig. 18

Fig. 19

Fig. 20

**700** Receive 1st set of GNSS signals

**702** Receive 2nd set of GNSS signals

**704** Determine quality number per satellite position

**706** Exclude satellite positions

**708** Determine sky area of good reception

**712** Forecasting per satellite position

**710** Forecasting for area of good reception

**714** Interpolation

**716** Clustering

**718** Performing movable operation

**Fig. 21**

**800**

Clustering using 2nd min.
quality criterion

**802**

Boundary zone ?  → yes →  **804**  Tighten up
quality criterion

no

**806**

Deduced reckoning position
guiding necessary ?  → yes →  **808**  Accuracy fulfilling 3rd min.
quality criterion ?

no

**812**

Scheduling

**814**

Fragmentation too high ?  → yes →  **816**  Adjust 2nd min.
quality criterion

no

**818**

Performing
movable operation

# Fig. 22

# Fig. 23

# Fig. 24

Detecting gradient — 900

Orienting vehicle — 902

Operation — 904

Deviation ? — 906

no        yes

## Fig. 25

100

1501    1500    1520

S—O

downhill

1501    1500    1522

## Fig. 26

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1228951 A1
- US 4322094 A

- JP H04356289 A